(19) Europäisches Patentamt
European Patent Office
Office européen des brevets

(11) **EP 2 184 583 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(51) Int Cl.:
***G01C 19/56*** *(2006.01)*

(21) Anmeldenummer: **08168846.7**

(22) Anmeldetag: **11.11.2008**

(54) **Mikromechanischer Coriolis-Drehratensensor**

Micromechanical coriolis rotation rate sensor

Capteur de vitesse micromécanique de rotation de Coriolis

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**12.05.2010 Patentblatt 2010/19**

(73) Patentinhaber: **Fraunhofer-Gesellschaft zur Förderung der angewandten Forschung e.V.
80686 München (DE)**

(72) Erfinder:
• **Merz, Peter**
**25557, Beldorf (DE)**
• **Weiss, Manfred**
**Itzehoe, 25524 (DE)**

(74) Vertreter: **Leonhard, Frank Reimund et al
Leonhard - Olgemöller - Fricke
Patentanwälte
Postfach 10 09 62
80083 München (DE)**

(56) Entgegenhaltungen:
**WO-A-92/21000**

**Beschreibung**

Die vorliegende Erfindung betrifft einen mikromechanischen Coriolis-Drehratensensor zur Erfassung von Drehraten mit Komponenten um Messachsen in drei zueinander orthogonalen Raumrichtungen (X-, Y- und Z-Achse), wobei der Sensor ein Substrat, eine Detektionsmasse und wenigstens zwei Antriebsmassen aufweist, wobei die Antriebsmassen jeweils relativ zum Substrat zu einer Primärbewegung antreibbar sind und die Detektionsmasse mit den Antriebsmassen mechanisch so gekoppelt ist, dass die Detektionsmasse durch eine Sekundärbewegung der Antriebsmassen, bewirkt durch Corioliskraft bei Wirkung einer zu erfassenden äußeren Drehrate, zu einer Erfassungsbewegung anregbar ist.

Coriolis-Drehratensensoren sind aus dem Stand der Technik allgemein bekannt. Sie dienen der Messung einer äußeren Drehrate eines Körpers oder Systems um eine oder zwei Achsen. Die Achse oder die Achsen sind relativ zum zu vermessenden Körper oder System definiert und mittels eines Koordinatenbezugssystems beschrieben, also im Falle zweier Achsen orthogonal zueinander ausgerichtet. Die Achsen werden im Allgemeinen auch als Messachsen bezeichnet. Coriolis-Drehratensensoren nutzten die bei einer Rotation um eine Messachse auftretenden Corioliskräfte auf ein bewegtes Feder-Masse-System.

Aufgrund Miniaturisierung und geringer Herstellungskosten finden mit MEMS-Technologie gefertigte Beschleunigungssensoren (zur Erfassung linearer Beschleunigungen) ein immer breiter werdendes Anwendungsfeld. Während MEMS-Beschleunigungssensoren schon in hohen Stückzahlen gefertigt werden und leistungsmäßig den mit herkömmlichen Technologien gefertigten Bauteilen gleichwertig sind, müssen bei Drehratensensoren aufgrund der sehr geringen Kräfteverhältnisse die Systemkonstruktion sowie die entsprechende Prozesstechnologie weit ausgeklügelter sein. Dadurch erklärt sich, dass für Beschleunigungssensoren schon zahlreiche MEMS-Designs bekannt sind, welche nicht nur Inertialbewegungen in Richtung einer Raumachse erfassen können, sondern zwei- oder auch dreidimensional, d.h. in Richtung aller Raumachsen, sensitiv sind. Für Drehratensensoren ist die Implementierung einer 3D-Sensitivität in einem MEMS-Bauelement aufwendig, da verschiedene Antriebs- und Sense-Moden kontrolliert angeregt und ausgelesen werden müssen. Dabei ist das mechanische und elektrische Übersprechen des Antriebs in den Sense-Mode einerseits sowie das Übersprechen der einzelnen Sense-Moden untereinander zu unterdrücken. Aus der DE 10 2007 012 163 A1 sind ein Drehratensensor sowie ein Verfahren zu dessen Herstellung bekannt. Der Drehratensensor umfasst ein in XY-Ebene eines Bezugskoordinatensystems ausgerichtetes Substrat, mindestens zwei Basiselemente und Ausleseeinrichtungen. Die Basiselemente umfassen ihrerseits jeweils einen Rahmen, eine Aufhängung des Rahmens am Substrat, zumindest eine seismische Masse, eine Aufhängung der seismischen Masse am Rahmen sowie Antriebsmittel zum Antreiben der Basiselemente. Die Basiselemente sind durch wenigstens einen am Substrat angeordneten Kopplungsbalken miteinander gekoppelt. Durch die Anordnung des Kopplungsbalkens am Substrat werden dessen Bewegungsmöglichkeiten relativ zum Substrat definiert, wie beispielsweise Freiheitsgrade seiner Bewegung verringert, so dass Störauslenkungen oder Störschwingungen der seismischen Massen über die Kopplung mit dem Kopplungsbalken vermindert oder unterdrückt werden. Der offenbarte Drehratensensor ist zur Erfassung von Drehraten um eine oder zwei Raumachsen geeignet. Eine Erfassung von Drehraten in alle drei Raumrichtungen ist mit diesem Drehratensensor nach dem Stand der Technik nicht möglich.

Die EP 1 775 551 A1 offenbart einen Drehratensensor, der mittels MEMS-Technik in einem Siliziumwafer ausgebildet ist. Er besitzt einen Ringbereich, der über acht Balkenfederelemente an einem Zentralbereich aufgehängt ist. Der Ringbereich kann Primär- und Sekundärvibrationen um die zentrale Aufhängung ausführen. Die Primärvibration wird durch Betätigungselektroden in einem cos2θ-mode angeregt. Bei Wirken einer äußeren Drehrate Ω um eine Achse senkrecht zum Ringbereich wird eine Corioliskraft erzeugt, die wiederum eine Sekundärvibration im sin2θ-mode erzeugt. Mit diesem Drehratensensor nach dem Stand der Technik ist lediglich die Erfassung einer äußeren Drehrate um eine Drehachse möglich.

Aus der US 2007/0266785 A1 ist ein Drehratensensor zur Erfassung einer Rotation um eine Erfassungsachse (Y-Achse) bekannt. Er besitzt eine Stützstruktur und zwei Massen, die flexibel so mit der Stützstruktur verbunden sind, dass sie Bewegungen in zwei entgegen gesetzte Richtungen entlang einer Antriebsachse senkrecht zur Erfassungsachse ausführen können. Auf die bewegten Massen wirkt in Abhängigkeit von der Drehrichtung der zu erfassenden äußeren Drehrate eine Corioliskraft, die zu einer Auslenkung oder Erfassungsbewegung um die Erfassungsachse führt. Der offenbarte Drehratensensor erfasst eine äußere Drehrate in einer Richtung senkrecht zur Antriebsachse. Die Erfassung von äußeren Drehraten mit Komponenten in drei Raumrichtungen (3D-Sensor) ist mit diesem Drehratensensor nicht möglich.

Um Drehraten in allen drei Raumrichtungen oder solche mit Komponenten in allen drei Raumrichtungen erfassen zu können, ist aus dem Stand der Technik bekannt, mehrere ein- oder zweidimensionale Einzelsensoren zu einer inertialen Messeinheit (Inertial Measurement Unit, IMU) zu kombinieren. Dabei werden Drehratensensoren zur Erfassung von Drehraten in einer Richtung, d.h. eindimensionale Einzelsensorelemente (Sensorchips), oder in zwei Richtungen (zweidimensionale Einzelsensorelemente) auf Chip- oder Leiterplattenebene oder in einem entsprechenden Sensorgehäuse kombiniert aufgebaut, was auch als Hybridaufbau oder Sensor-Cluster bezeichnet wird. Nachteilig bei inertialen Messeinheiten im Hybridaufbau oder bei einer Kombination mehrerer unterschiedlicher Einzelsensordesigns auf Chipebene ist die relativ aufwendige Fertigung sowie der verhältnismäßig hohe Raumbedarf, da für die Erfassung von Drehraten in den unterschiedlichen Raumrichtung jeweils eine eigene entsprechende Sensorstruktur mit Antriebsmassen, Detektionseinheiten, Antrieben und Erfassungssystemen vorgesehen werden muss.

Ein Verfahren zur Herstellung eines solchen Hybridaufbaus ist beispielsweise aus der DE 10 2006 016 260 A1 bekannt. Dabei wird ein Wafer mit entsprechenden aktiven Strukturen, z.B. in sich eigenständig funktionalen Ein- oder Zwei-Achs-Einzelsensoren, bereitgestellt und mit einem Kappenwafer, der Kavitäten oder Vertiefungen für die Einzelsensoren aufweist, gehäust. Ein Coriolis-Drehratensensor, der zur Erfassung von Drehraten in drei Raumrichtungen geeignet ist, sowie ein Verfahren zu dessen Herstellung ist in "Novel 3-Axis Gyroscope on a Single Chip using SOI-Technology" von M-Traechter, T. Link, J. Dehnert, J. Auber, P. Nommensen und Y. Manoli, Inertial Sensors & Systems, HSG-IMIT, Villingen-Schwennigen, Germany, offenbart. Die Veröffentlichung beschreibt einen Sensor-Cluster, bei dem zur Herstellung eines zur Erfassung von Drehraten in drei Raumrichtungen geeigneten Sensoreinheit ein üblicher "Out of plane"-Sensor (Sensor, bei dem die Erfassungsachse aus der Substratebene herausragt) mit zwei "In-plane"-Sensoren (Sensor, bei dem die Erfassungsachse in der Substratebene liegt) kombiniert wird. Die beschriebene Sensoreinheit weist im Ergebnis drei in sich jeweils selbstständig funktionsfähige Einzelsensorelemente auf, die jeweils eine Drehrate in einer bestimmten zugewiesenen Raumrichtung (X, Y oder Z) erfassen. In sich selbst funktionsfähig bedeutet, dass jedes Einzelsensorelement alle zur Erfassung der jeweiligen zugewiesenen Drehrate notwendigen Funktionseinheiten wie Antriebsmassen, Detektionsmassen, Antriebseinheiten oder -elektroden sowie Detektionseinheiten oder -elektroden aufweisen. Die demnach hohe Anzahl der Funktionseinheiten beinhaltet bestimmte Nachteile, wie hohe Produktionskosten, hoher Produktionsaufwand, insbesondere aufwendige Montage, oftmals nicht unproblematischer Abstimmung der Einzelsensorelemente zueinander, komplexer Gehäusung sowie große Abmessungen. Diese Nachteile und die Implementierung mehrerer Einzelsensorelemente, die jeweils eine zugewiesene Drehrate in einer bestimmten Raumrichtung erfassen, soll mit der vorliegenden Erfindung gerade vermieden werden.

Die WO 92/21000 offenbart einen mikromechanischen Coriolis-Drehratensensor mit einer um eine Z-Achse drehbar aufgehängten Stützstruktur, an der wiederum vier seismische Massen mittels flexibler Balken um 90° um die Z-Achse herum versetzt angeordnet sind. Der Sensor kann Drehschwingungen um alle drei Raumachsen erfassen. Drehungen um die X- und Y-Achse werden durch einen Versatz der seismischen Achsen selbst, Drehungen um die Z-Achse durch eine von den seismischen Massen auf die Stützstruktur übertragene Drehung desselben erfasst.

Ausgehend von dem zuvor beschriebenen Stand der Technik liegt der vorliegenden Erfindung die **Aufgabe** zugrunde, einen mikromechanischen Coriolis-Drehratensensor und ein Verfahren zu schaffen, der bzw. das zur Erfassung, insbesondere zeitgleichen Erfassung, von beliebig relativ zum Sensor im dreidimensionalen Raum orientierten Drehraten oder Drehratenkomponenten geeignet ist, wobei die hierzu notwendigen Funktionseinheiten auf Sensorebene in den Sensor integriert sind, der gegenüber Sensorsystemen nach dem Stand der Technik benötigte Bauraum möglichst gering ist, die Anzahl der zur Erfassung von Drehraten in allen drei Raumrichtungen notwendigen Funktionseinheiten wie Anregungsmassen, Antriebseinheiten, Detektionseinheiten, Kopplungssystemen, verringert ist, und die Entkoppelung zwischen Antriebsmoden und Detektionsmoden verbessert ist. Der Sensor soll insbesondere mit möglichst wenigen Ätzschritten vorzugsweise aus einem Substrat hergestellt werden können.

Die **Lösung** der oben beschriebenen Aufgabe besteht in einem mikromechanischen Coriolis-Drehratensensor zur Erfassung von Drehraten mit Komponenten um Messachsen in drei zueinander orthogonalen Raumrichtungen (X-, Y- und Z-Achse), aufweisend: ein Substrat, eine Detektionsmasse und wenigstens zwei Antriebsmassen, wobei die Antriebsmassen jeweils relativ zum Substrat zu einer Primärbewegung antreibbar sind, wobei die Richtung der Primärbewegung einer der wenigstens zwei Antriebsmassen senkrecht zur Richtung der Primärbewegung einer anderen der wenigstens zwei Antriebsmassen ist, die Detektionsmasse mit den Antriebsmassen gekoppelt ist, derart, dass die Detektionsmasse durch eine Sekundärbewegung der Antriebsmassen, bewirkt durch Corioliskraft bei Wirkung einer zu erfassenden äußeren Drehrate, zu einer Erfassungsbewegung anregbar ist, und die Detektionsmasse relativ zum Substrat als Erfassungsbewegung Drehschwingungen um Drehachsen in den drei zueinander orthogonalen Raumrichtungen (Raumachsen X,Y,Z) ausführen kann.

Die obige Aufgabe wird des Weiteren durch eine beschleunigungsmesseinheit nach Anspruch 14 sowie durch ein Verfahren nach Anspruch 15 gelöst.

Der erfindungsgemäße Coriolis-Drehratensensor wird bevorzugt mit einem oberflächenmikromechanischen Prozess oder einem ähnlichen Verfahren hergestellt, wie er in P. Merz, W. Reinert, K. Reimer, B. Wagner, 'PSM-X2: Polysilicon surface micromachining process platform for vacuum-packaged sensors, Konferenzband Mikrosystemtechnik-Kongress 2005, D/Freiburg, VDE Verlag, Seiten 467-470, beschrieben ist, insbesondere aus einem vorzugsweise einteiligen Substrat.

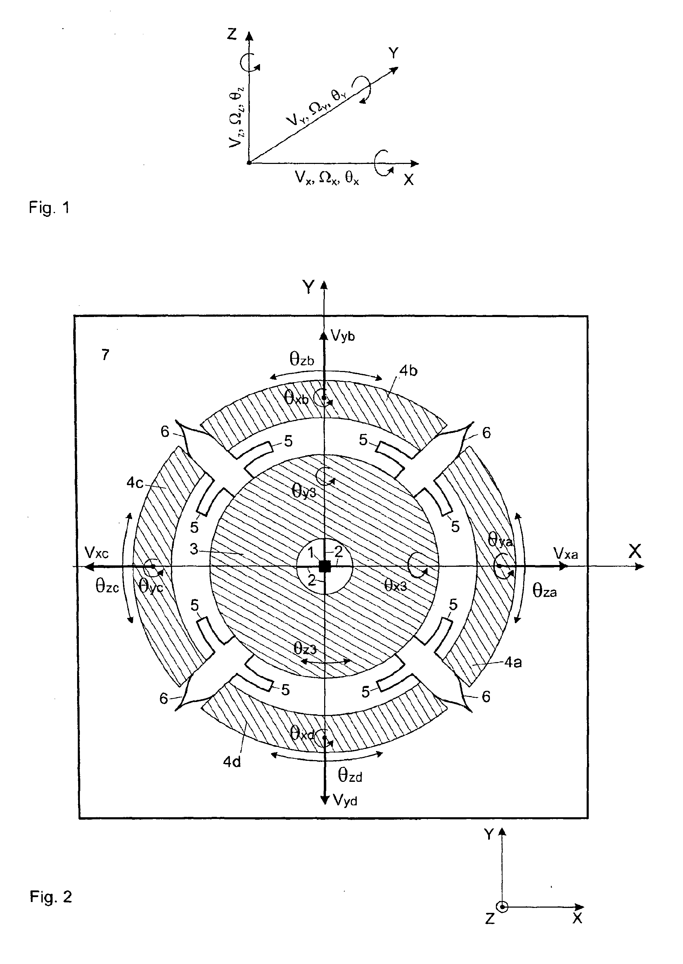

Bei der Beschreibung des erfindungsgemäßen Coriolis-Drehratensensors wird zum Zwecke einer besseren Verständlichkeit das in der Figur 1 dargestellte Karthesische Koordinatensystem mit folgenden in die Figur 1 eingezeichneten Begriffsdefinitionen verwendet:

X, Y, Z:  Raumachsen
$V_x$, $V_y$, $V_z$:  Geschwindigkeitsvektoren in positiver Richtung der X-, Y- bzw. Z-Achse
$\Omega_x$, $\Omega_y$, $\Omega_z$:  äußere Drehrate um die X-, Y- bzw. Z-Achse
$\theta_x$, $\theta_y$, $\theta_z$:  Drehwinkel um die X-, Y- bzw. Z-Achse

Der Ursprung des Koordinatensystems liegt im Drehpunkt der relativ zum Substrat bewegten Einheiten des Sensors, beispielsweise von Detektionsmasse oder Antriebsmasse. In der vorliegenden Beschreibung der Erfindung ist das Koordinatensystem beispielhaft so ausgerichtet, seine X-und Y-Achse parallel zur und in der Substratebene angeordnet sind, während sich die Z-Achse orthogonal zur Substratebene erstreckt. Eine andere Orientierung des Koordinatensystems zum Sensor sowie den Drehraten etc. ist selbstverständlich möglich, weshalb sich aus der gewählten Orientierung keine Beschränkungen für die Erfindung ergeben.

Mit dem erfindungsgemäßen Coriolis-Drehratensensor können in vorteilhafter Weise äußere Drehraten unabhängig von ihrer Orientierung relativ zum Sensor in allen Richtungen des Raums erfasst werden. Dies ist allein mit dem erfindungsgemäßen Einzelsensorelement möglich, ohne dass zusätzliche Sensoreinheiten zur Erfassung von Drehraten in bestimmten Raumrichtungen notwendig wären. Insbesondere sind - anders als bei den zum Stand der Technik beschriebenen Sensoreinheiten, bei denen ein Drei-Achs-Sensor durch Implementierung von Ein- und Zwei-Achs-Sensoren auf Chip- oder Leiterplattenebene als Sensorcluster gebildet wird - die Funktionseinheiten des Sensors, wie Antriebs- und Detektionsmassen sowie ggf. Kopplungselemente zwischen diesen und zum Substrat, auf Sensorebene in den Sensor integriert. Der Sensor ist als Einzelsensorelement ausgebildet, was bedeutet, dass alle für die Erfassung von beliebig in den drei Raumrichtungen orientierten Drehraten notwendigen Detektions- und Antriebsmassen an einem, vorzugsweise einteiligen, Substrat angeordnet sind. Der Sensor nach der Erfindung ist ein echter Drei-Achs-Coriolis-Drehratensensor, der sich gegenüber Sensorclustern nach dem Stand der Technik durch einen geringen Bauraum, günstige Herstellungskosten sowie einfache Herstellung auszeichnet.

Nach Anspruch 1 weist der erfindungsgemäße Drehratensensor ein Substrat, eine Detektionsmasse und wenigstens zwei Antriebsmassen auf. Vorzugsweise weist der Sensor eine einzige Detektionsmasse auf, mit der jede beliebig orientierte äußere Drehrate erfassbar ist. Das Substrat des Drehratensensors ist bei dessen bestimmungsgemäßen Einsatz mittelbar oder unmittelbar mit dem zu vermessenden System verbunden und bildet ein Bezugssystem aus, zu dem die zu erfassenden äußeren Drehraten bestimmt werden (zusammenfallend mit dem zur Beschreibung verwendeten Koordinatensystem).

Die Antriebsmassen sind relativ zum Substrat zu einer Primärbewegung antreibbar und führen diese wenigstens während eines Messvorganges oder permanent aus. Die Primärbewegung ist vorzugsweise eine translatorische Schwingung, kann jedoch ebenfalls eine kreisförmige Bewegung sein. Die Detektionsmasse ist mit den Antriebsmassen gekoppelt, vorzugsweise mechanisch gekoppelt, z.B. mittels mechanischer Koppelelemente, insbesondere mittels Federelementen. Die Kopplung dient grundsätzlich dazu, Bewegungen der Antriebsmassen relativ zum Substrat und Bezugssystem oder Komponenten hiervon in gewünschter Weise auf die Detektionsmasse zu übertragen. Durch die Primärbewegung der Antriebsmassen relativ zum Substrat werden bei Einwirken einer äußeren Drehrate entsprechend deren Ausrichtung zum Substrat und Bezugskoordinatensystem auf die Antriebsmassen wirkende Corioliskräfte erzeugt. Diese Corioliskräfte bewirken eine Sekundärbewegung der Antriebsmassen, die durch die Kopplung, also mittels der Federelemente, zwischen Detektionsmasse und den Antriebsmassen auf die Detektionsmasse übertragen wird. Durch die Übertragung der Sekundärbewegung der Antriebsmassen auf die Detektionsmasse wird diese zum Ausführen einer Erfassungsbewegung angeregt, deren Betrag und Richtung von Größe und Orientierung der äußeren Drehrate abhängig sind. Der erfindungsgemäße Sensor ist so ausgebildet, dass die Pimärbewegungen der Antriebsmassen bei einer Drehung des gesamten Sensors um jede der drei Raumachsen Corioliskräfte hervorrufen, die wiederum Sekundär- sowie Erfassungsbewegungen erzeugen.

Der erfindungsgemäße Drehratensensor ist derart ausgebildet, dass die Richtung der Primärbewegung einer der wenigstens zwei Antriebsmassen (auf im Folgenden als erste Antriebsmasse bezeichnet) senkrecht zur Richtung der Primärbewegung einer anderen der wenigstens zwei Antriebsmassen (im Folgenden als zweite Antriebsmasse bezeichnet) ist. Die erste Antriebsmasse kann beispielsweise eine Primärbewegung in X-Richtung ausführen, in welchem Fall die zweite Antriebsmasse eine Primärbewegung senkrechte hierzu in Y-Richtung ausführt. Die Primärbewegungen beider Antriebsmassen liegen orthogonal zueinander in der XY-Ebene. Bei Vorliegen einer äußeren Drehrate wirken nun durch den Coriolis-Effekt bedingt Drehmomente auf die jeweiligen Antriebsmassen ein. So führt im obigen Fall eine äußere Drehrate um die X-Achse zu auf die zweite Antriebsmasse einwirkenden Corioliskräften, die Sekundärbewegungen der zweiten Antriebsmassen bewirken. Eine äußere Drehrate um die X-Achse bewirkt hingegen keine Sekundärbewegung der ersten Antriebsmasse, da die Richtung deren Primärbewegung zur Richtung der äußeren Drehrate parallel ist und somit die Corioliskraft gemäß der Formel

$$F_{cor}=2m(v \times \Omega)$$

| | |
|---|---|
| $F_{cor}$ | Corioliskraft |
| m | Masse der Antriebsmasse |
| $\Omega$ | äußere Drehrate |
| V | Geschwindigkeit der Antriebsmasse |

als Kreuzprodukt der äußeren Drehrate mit der Primärgeschwindigkeit der ersten Antriebsmasse einen Wert von Null besitzt.

In ähnlicher Weise führt eine äußere Drehrate um die Y-Achse zu auf die erste Antriebsmasse wirkenden Corioliskräften, die wiederum Sekundärbewegungen der ersten Antriebsmasse bewirken. Eine äußere Drehrate um die Y-Achse bewirkt aufgrund der zuvor dargelegten Zusammenhänge (Kreuzprodukt) keine auf die zweite Antriebsmassen wirkenden Corioliskräfte, weshalb diese nicht zu Sekundärbewegungen angeregt wird.

Eine äußere Drehrate in Z-Richtung schließlich ruft Corioliskräfte sowohl auf die erste als auch auf die zweite Antriebsmasse hervor. Sind die Primärbewegungen der Antriebsmassen nach Art und Richtung entsprechend aufeinander abgestimmt, summieren sich die Corioliskräfte zu einem Drehmoment, welches je nach Drehrichtung im Uhrzeigersinn oder entgegen dem Uhrzeigersinn um die Z-Achse wirkt. Infolgedessen werden die Antriebsmassen zu Sekundärbewegungen im Uhrzeigersinn oder entgegen dem Uhrzeigersinn um die Z-Achse angeregt.

Da die Antriebsmassen erfindungsgemäß jeweils eine Primärbewegung ausführen, die zur Primärbewegung einer anderen Antriebsmasse orthogonal ausgerichtet ist, bewirkt eine äußere Drehrate unabhängig von ihrer Orientierung im Raum und Ausrichtung zum Sensor eine entsprechende Reaktion in Form von einer Sekundärbewegung der ersten und/oder der zweiten Antriebsmasse(n). Die Sekundärbewegung(en) bewirken aufgrund der Kopplung zwischen Detektionsmasse und Antriebsmassen Erfassungsbewegungen der Detektionsmasse, die diese relativ zum Substrat ausführt. Erfindungsgemäß ist die Detektionsmasse derart ausgebildet, dass sie als jeweilige Erfassungsbewegung eine Drehschwingung um jede der drei Achsen des Bezugskoordinatensystems (in den drei zueinander orthogonalen Raumrichtungen X, Y und Z) ausführen kann. Mit dem erfindungsgemäßen Sensordesign sind äußere Drehungen des Sensors oder des mit dem Sensor verbundenen Bezugssystems um alle drei Raumachsen erfassbar.

Nach einer besonders vorteilhaften Ausführungsform der Erfindung kann der Coriolis-Drehratensensor in jeder Variante wenigstens vier Antriebsmassen aufweisen. Die wenigstens vier Antriebsmassen werden im Folgenden als erste, zweite, dritte und vierte Antriebsmasse bezeichnet. Sie sind derart zueinander angeordnet und miteinander gekoppelt, dass jeweils zwei Antriebsmassen gegenphasige Primärbewegungen mit entgegengesetzter Bewegungsrichtung ausführen. Die verbleibenden beiden Antriebsmassen führen hierzu orthogonale Primärbewegungen ebenfalls gegenphasig mit entgegengesetzter Bewegungsrichtung aus. Beispielsweise schwingt die erste Antriebsmasse in positiver X-Richtung, während die dritte Antriebsmasse mit gleicher Frequenz gegenphasig in negativer X-Richtung schwingt, wobei die zweite Antriebsmasse in positiver Y-Richtung und die vierte Antriebsmasse mit gleicher Frequenz gegenphasig in negative Y-Richtung schwingt. Auf diese Weise werden die Primärbewegungen der Antriebsmassen nicht oder nur mit sich gegenseitig überlagernden und auslöschenden Komponenten auf die Detektionsmasse übertragen, wodurch eine vollständige mechanische Entkopplung der Erfassungsmoden von den Primärbewegungen erzielt wird, was bedeutet, dass über die Kopplung zwischen den Antriebsmassen und der Detektionsmasse im Wesentlichen nur eine Übertragung von Sekundärbewegungen bewirkt wird.

Nach einer weiteren Ausführungsform der Erfindung ist vorgesehen, dass die Detektionsmasse an dem Substrat angeordnet ist. Die Anordnung kann mittelbar oder unmittelbar erfolgen. Insbesondere kann die Detektionsmasse durch einen Verankerungspunkt an dem Substrat oder an einer auf das Substrat aufgetragenen Schicht angeordnet sein. Bei mittelbar oder unmittelbar am Substrat angeordneter Detektionsmasse sind die Antriebsmassen nicht unmittelbar mit dem Substrat verbunden, sondern lediglich mittelbar über die Detektionsmasse. Alternativ ist möglich, dass die Antriebsmassen jeweils mittelbar oder unmittelbar an dem Substrat angeordnet sind und die Anordnung der Detektionsmasse am Substrat mittelbar über die Antriebsmassen erfolgt.

Es ist vorteilhaft, wenn die Detektionsmasse relativ zu dem Substrat translatorisch unverschiebbar angeordnet oder angelenkt ist. In diesem Fall verbleiben für Bewegungen der Detektionsmasse drei Freiheitsgrade, nämlich in Form von Rotationsschwingungen um die drei Achsen des Koordinatensystems. Eine solche Anordnung der Detektionsmasse an dem Substrat kann mittels unterschiedlichster Lagerstrukturen zwischen Detektionsmasse und Substrat erzielt werden, z.B. mittels einer oder mehrerer, vorzugsweise symmetrisch zum Drehpunkt der Detektionsmasse angeordneten Anlenkungsstruktur oder -strukturen. Besonders bevorzugt ist jedoch eine Anordnung der Detektionsmasse mittels einer in ihrem Massezentrum inneren Aufhängung am Substrat oder einer auf das Substrat aufgetragenen Schicht in Form eines zentralen Ankers. Die innere Aufhängung umfasst vorzugsweise Federstrukturen, die die Detektionsmasse mittelbar z.B. über ein zentral angeordnetes Stift- oder Ankerelement o.ä. oder unmittelbar zentral mit dem Substrat verbinden. Die Federstrukturen stellen dabei vorzugsweise einzeln oder in Kombination translatorischen Relativverschiebungen der Detektionsmasse zum Substrat Widerstand entgegen und schränken diese weitgehend vollständig ein. Währenddessen werden Rotationsbewegungen um die drei Achsen des Bezugskoordinatensystems im Wesentlichen ohne Einschränkung ermöglicht.

Eine Alternative zur Verwendung einer zentralen Aufhängung mit Federelementen ist eine zentrale kardanische Aufhängung der Detektionsmasse am Substrat. Bei einer solchen kardanischen Aufhängung ist ein Rahmenelement oder ähnliches mittels erster Federelemente, die eine Rotation des Rahmenelements um eine erste Achse ermöglichen, am zentralen Anker oder Aufhängungspunkt angeordnet. Am Rahmenelement wiederum sind zweite Federelemente angeordnet orthogonal zu den ersten Federelementen angeordnet, die eine Rotation orthogonal zur Drehrichtung des Rahmenelements ermöglichen. An den zweiten Federelementen wiederum ist die Detektionsmasse aufgehängt. Gegebenenfalls, das heißt wenn mittels der ersten und zweiten Federelemente die Detektionsmasse nur mit zwei Freiheitsgraden aufgehängt ist, kann ein weiterer Rahmen und ein weiteres Federelement für eine Rotation um eine dritte Achse vorgesehen sein, so dass die Detektionsmasse über eine solche kardanische Aufhängung in drei Raumrichtungen drehbeweglich gelagert ist.

Bei einer besonders vorteilhaften Ausführungsform sind die Antriebsmassen um die Detektionsmasse herum angeordnet, das heißt ausgehend vom Nullpunkt des Bezugskoordinatensystems radial außerhalb der Detektionseinheit. Vorzugsweise sind die Detektionsmasse und die Antriebsmassen in einer Ebene angeordnet (im vorliegenden Koordinatensystem in der X-Y-Ebene). Es wird des Weiteren vorgeschlagen, dass jeweils zwei Antriebsmassen einander gegenüberliegend mit zwischenliegender Detektionsmasse angeordnet sein können, insbesondere im Falle von wenigstens vier Antriebsmassen. Hierdurch wird in besonders einfacher Weise eine Entkopplung der Primärbewegungen von den Sekundärbewegungen der Antriebsmassen und den Erfassungsbewegungen der Detektionsmasse erreicht. Primärbewegungen der Antriebsmassen werden vorzugsweise nicht oder nur derart auf die Detektionsmasse übertragen, dass sich die aufgrund von Primärbewegungen gegenüberliegender Antriebsmassen in die Detektionsmasse eingeleiteten Kraftkomponenten gegenseitig vorzugsweise vollständig aufheben. Aufgrund der einander gegenüberliegenden Anordnung je zweier Antriebsmassen löschen sich deren Sekundärbewegungen nicht gegenseitig aus, sondern summieren sich. Die sich so gegenseitig verstärkenden Sekundärbewegungen regen die Detektionseinheit zur Erfassungsbewegung an, die dann über geeignete Messmittel oder Detektionsmechanismen ausgewertet wird.

Die Kopplung zwischen Antriebsmassen und Detektionsmasse ist vorzugsweise so ausgebildet, dass zwar die Sekundärbewegungen, nicht jedoch die Primärbewegungen der Antriebsmassen auf die die Detektionsmasse übertragen werden und diese zum Ausführen einer Erfassungsbewegung anregen können. Anders ausgedrückt wird durch die spezifische Ausbildung der mechanischen Koppelstruktur eine mechanische Entkopplung der Erfassungsbewegungen (Sense Moden) von der oder den jeweils vorliegenden Primärbewegungen (Drive Moden) erzielt. Durch die Kopplung werden neben der definierten Übertragung von Bewegungen der Antriebsmassen auf die Detektionsmasse auch die jeweiligen Freiheitsgrade jeder Antriebsmasse relativ zur Detektionsmasse definiert und eingestellt. Mit Vorteil erfolgt die Kopplung derart, dass wenigstens eine Antriebsmasse ihre Primärbewegung in radialer Richtung ungehindert ausführen kann. Hinsichtlich der Sekundärbewegung soll die Kopplung nach einem weiteren Vorschlag der Erfindung derart ausgebildet sein, dass die Antriebsmasse relativ zur Detektionsachse zwei rotatorische Sekundärbewegungen in zueinander orthogonalen Raumrichtungen ausführen kann. Mit besonderem Vorteil wird durch die Kopplung eine rotatorische Sekundärbewegung der Antriebsmasse um eine zur Primärbewegung parallele Raumrichtung im Wesentlichen verhindert.

Jede Antriebsmasse ist gemäß einem weiteren Vorschlag der Erfindung jeweils mittels wenigstens eines Federelementes, insbesondere mittels zweier Federelemente, mit der Detektionsmasse gekoppelt. Mit besonderem Vorteil ist wenigstens eine Antriebsmasse, vorzugsweise jede Antriebsmasse, jeweils mittels eines oder mehrerer erster Federelemente, die vorzugsweise mit dem zur Detektionsmasse zugewandten Innenbereich der Antriebsmasse verbunden und an diesem angeordnet sind/und mittels eines oder mehrerer zweiter Federelemente, die an dem der Detektionsmasse abgewandten Außenbereich der Antriebsmasse angeordnet sind, mit der Detektionsmasse gekoppelt. Aufgrund einer derartigen Federgeometrie sind im Idealfall nur drei Bewegungs-Moden der Antriebsmassen relativ zur Detektionsmasse möglich, nämlich die Primärbewegung als angeregte Bewegung vorzugsweise in Form einer translatorischen Schwingung in radialer Richtung, jeweils gegenphasig zur gegenüberliegenden Antriebsmasse, für Antriebsmassen mit Primärbewegung in Richtung der X-Achse Sekundärbewegungen in Form von Torsionsbewegungen um die Y- sowie Z-Achse sowie für Antriebsmassen mit Primärbewegung in Richtung der Y-Achse Sekundärbewegungen in Form von Torsionsbewegungen um die X- sowie Z-Achse. Alle weiteren Bewegungsmöglichkeiten werden durch die obige Federgeometrie in vorteilhafter Weise im Wesentlichen vollständig unterdrückt bzw. möglichst stark eingeschränkt. Dieses gilt insbesondere für zwei parasitäre Hauptmoden, auf die hier nochmals speziell eingegangen werden wird.

Zum einen soll der Resonanzpeak einer phasengleichen Schwingung zweier gegenüberliegender Antriebsmassen aus der XY-Ebene heraus (Butterfly Mode) möglichst eliminiert werden. Dieses kann beispielsweise dadurch geschehen, dass die Resonanzfrequenz dieser parasitären Schwingung möglichst weit oberhalb der Resonanzfrequenz der Primärbewegung der Antriebsmassen liegt. Im vorliegenden Fall wird das dadurch erreicht, indem die Antriebsmasse mit Federelementen am Innenbereich einerseits und mit Federelementen am Außenbereich andererseits an der Detektionsmasse angeordnet ist. Hierdurch kommt es zu einer Resonanzfrequenzbereichsverschiebung aus dem Bereich der Primärbewegungen heraus.

Zum anderen sollen Sekundärbewegungen in Form von Rotationsschwingungen um die Achse in Bewegungsrichtung der Primärbewegung minimiert oder im Wesentlichen vollständig verhindert werden. Dieses wird vorzugsweise durch die Verwendung von zwei möglichst von der entsprechenden Bewegungsachse entfernt liegenden Federelementen erzielt, die einer derartigen Verdrehung der Antriebsmassen um die jeweiligen Koordinatenachsen herum ausreichenden Widerstand entgegensetzen.

Bei einer besonders vorteilhaften Ausführungsform der Erfindung weist wenigstens eine, vorzugsweise jede Antriebsmasse einen Durchlass auf, der sich in radialer Richtung erstreckt und wenigstens einseitig, vorzugsweise jedoch beidseitig offen ist. In dem Durchlass ist eine im Wesentlichen biegesteife Struktur, vorzugsweise in Form einer Balkenstruktur, angeordnet, mit der das erste, mit dem zur Detektionsmasse zugewandten Innenbereich der Antriebsmasse verbundene Federelement mit dem zweiten, an dem der Detektionsmasse abgewandten Außenbereich der Antriebsmasse angeordneten Federelement verbunden ist.

Nach einer weiteren Ausführungsform weist wenigstens eine, vorzugsweise jede Antriebsmasse eine Ausnehmung zur Aufnahme wenigstens eines der Federelemente auf. Die Ausnehmung ist vorzugsweise in dem der Detektionsmasse abgewandten Außenbereich der Antriebsmasse angeordnet. Sie ist vorzugsweise mittels des Durchlasses über den der Detektionsmasse zugewandten Innenbereich der Antriebsmasse zur Detektionsmasse hin geöffnet. Das wenigstens eine, in der Ausnehmung angeordnete Federelement ist über die in dem Durchlass angeordnete Balkenstruktur mit dem anderen Federelement verbunden. Das andere Federelement ist vorzugsweise in einem zwischen Antriebsmasse und Detektionsmasse vorliegenden Zwischenraum angeordnet, hierzu kann die Antriebsmasse auch eine weitere Ausnehmung aufweisen.

Der Antrieb der Antriebselemente erfolgt vorzugsweise elektrostatisch, beispielsweise über ein Anlegen von Spannungen an Fingerelektroden, piezoelektrisch oder magnetisch durch Einkoppeln eines Magnetfeldes. Der Coriolis-Drehratensensor weist nach einem weiteren Vorschlag wenigstens einen Antrieb zum Erzeugen einer Primärbewegung einer Antriebsmasse auf, vorzugsweise jeweils einen Antrieb für jede Antriebsmasse. Der Antrieb bewirkt die Primärbewegung als Relativbewegung zwischen Antriebsmasse und Substrat. Mit besonderem Vorteil weist der Antrieb je Antriebsmasse eine vorzugsweise an der Antriebsmasse angeordnete, kammartige Elektrode auf, die jeweils mit einer kammartigen Gegenelektrode zusammenwirkt, die an dem Substrat angeordnet ist. Eine Gegenelektrode kann mittelbar oder unmittelbar über Ankerstrukturen an dem Substrat fixiert sein. Gleiches gilt für die Elektroden, die ebenfalls mittelbar oder unmittelbar an der jeweiligen Antriebsmasse fixiert sein können. Durch Anlegen einer Wechselspannung wird zwischen den Elektroden und Gegenelektroden eine elektrostatische Kraft induziert, so dass die jeweilige Antriebsmasse relativ zum Substrat ausgelenkt wird. Wird dabei eine elektrische Wechselspannung in der Nähe der mechanischen Resonanzfrequenz eine Antriebsmasse angelegt, kann bei niedrigem Dämpfungsfaktor (z.B. im Vakuum) auch bei relativ kleinen Spannungsamplituden eine große Auslenkung im Bereich von 0,1 bis 100 $\mu$m erreicht werden. Die Konstruktionselemente des elektrostatischen Antriebs wie Ankerstrukturen, Elektroden und Gegenelektroden sind vorzugsweise so ausgelegt, dass sie weder durch die anliegende elektrostatische Kraft, noch durch die bei Primär- oder Sekundärbewegungen der jeweiligen Antriebsmasse auftretenden Trägheitskräfte verzerrt werden.

Um die Primär- und Sekundärbewegungen der Antriebsmassen aufeinander abzustimmen und einstellen zu können, können die Antriebsmassen vorzugsweise miteinander gekoppelt sein, vorzugsweise über Kopplungsfedern. Die Kopplungsfedern sollen sicherstellen bzw. stellen sicher, dass die Antriebsmassen in der Primärbewegung simultan in Antiphase schwingen. Durch die Kopplung der Antriebsmassen miteinander werden diese quasi als gekoppelte Antriebsmasse ausgebildet, die vorzugsweise nur ein Hauptschwingungsmode und somit nur eine Resonanzfrequenz aufweist. Durch diese Kopplungsfedern zwischen den Antriebsmassen kann erreicht werden, dass die Primärmode und die drei Sekundärmoden die niedrigsten Resonanzfrequenzen darstellen. Insbesondere sind Bewegungen, bei denen sich mindestens zwei Antriebsmassen parallel bzw. in Phase bewegen, nahezu vollständig unterbunden, die ihre Resonanzfrequenz deutlich höher liegt als die vier zuvor genannten Arbeitsfrequenzen. Da derartige parallel Bewegungsmuster bei Beschleunigung in der XY-Ebene auftreten, zeigt der Sensor eine gute Schockrobustheit und Vibrationsfestigkeit. Mit besonderem Vorteil sind die Kopplungsfedern in Form von gefalteten oder u-förmigen Federelementen ausgebildet.

An den Antriebsmassen können neben den Kopplungsfedern weitere Strukturen angebracht sein, die zum Beispiel die mechanische Stabilität des Systems Antriebsmassen/Kopplungsfedern vergrößern oder beeinflussen. Beispielsweise kann an den Kopplungsfedern, im Falle von u-förmigen Kopplungsfedern insbesondere an deren Umlenkpunkt, und/oder mittelbar anderweitig an den Antriebsmassen eine umlaufende Ringstruktur vorgesehen sein, die die Kopplungsfedern miteinander koppelt und deren mechanisches Verhalten synchronisiert. Eine weitere Möglichkeit zur Beeinflussung des mechanischen Verhaltens des Systems Antriebsmassen/Kopplungsfedern sind Außenfedern, die vorzugsweise über Außenanker an dem Substrat befestigt sind. Die Außenfedern können an den Antriebsmassen und/oder an den Kopplungsfedern angeordnet sein und deren Bewegungsmöglichkeiten relativ zum Substrat in gezielter Weise beeinflussen.

Nach einem weiteren Vorschlag der Erfindung weist ein erfindungsgemäßer Drehratensensor wenigstens zwei erste Elektrodenpaare zur Detektion deren Verkippung um X, wenigstens zwei zweite Elektrodenpaare zur Detektion deren Verkippung um Y, sowie wenigstens zwei dritte Elektrodenpaare zur Detektion deren Verkippung um Z auf. Jedes Elektrodenpaar umfasst jeweils eine am Substrat angeordnete Gegenelektrode sowie eine an der Detektionsmasse angeordnete Elektrode. Jeweils ein Elektrodenpaar ist auf einer Seite der Detektionsmasse angeordnet, das verbleibende Elektrodenpaar auf der gegenüberliegenden Seite (der Detektionsmasse sowie des Nullpunkts des Bezugskoordinatensystems). Um die Messauflösung zu verbessern, braucht nach einem weiteren Vorschlag nicht die Kapazitätsänderung an einer Elektrode/Gegenelektrode gemessen zu werden, sondern kann die differentielle Kapazität von zwei einander zugeordneten Elektrodenpaaren erfasst werden, so dass der absolute Kapazitätswert unerheblich ist. Hierzu ist des Weiteren vorgesehen, dass die Elektrodenpaare so miteinander verschaltet sind, dass die differentiellen Kapazitäten erfasst werden können. In der Ruhelage der Detektionsmasse ist die Differenz der Kapazitätswerte einander zugeordneter, das heißt einander gegenüber liegender Elektrodenpaare (jeweils umfassend eine Elektrode und eine Gegenelektrode) gleich Null. Bei Vorliegen einer Auslenkung der Detektionsmasse aufgrund einer Erfassungsbewegung vergrößert sich die Kapazität des einen Elektrodenpaars, während sich die des komplementären Elektrodenpaars in gleicher Weise verringert, so dass die Kapazitätsdifferenz auf den doppelten Wert der jeweiligen Kapazitätsänderung anwächst.

Um eine Erfassung der Erfassungsbewegungen in allen drei Raumrichtungen gewährleisten zu können, kann bei jeder Ausführungsform des Sensors nach einem weiteren Vorschlag der Erfindung wenigstens ein Elektrodenpaar in Form von Fingerelektroden ausgebildet sein, die mit entsprechenden Fingergegenelektroden am Substrat zusammenwirken. Des Weiteren kann wenigstens ein Elektrodenpaar in Form von zwischen der Detektionsmasse und dem Substrat und/oder zwischen der Detektionsmasse und einem auf der dem Substrat abgewandten Seite ausgebildeten Gegensubstrat angeordneten Flächenelektroden mit entsprechenden Flächengegenelektroden am Substrat bzw. Gegensubstrat ausgebildet sein. Vorzugsweise sind beiderseits der Detektionsmasse einander gegenüber liegende Fingerelektroden angeordnet.

Die vorliegende Erfindung betrifft des Weiteren eine Inertiale Messeinheit (IMU, Inertial Measurement Unit), die einen Drehratensensor gemäß der vorliegenden Erfindung aufweist. Mit besonderem Vorteil kann die Beschleunigungsmesseinheit neben dem erfindungsgemäßen 3D-Drehratensensor Beschleunigungssensoren zur Erfassung linearer Beschleunigungen in jeweils eine, zwei oder drei Raumrichtungen umfassen. Die Beschleunigungsmesseinheit kann als Chip mit herkömmlicher Aufbau- und Verbindungstechnologie zusammen mit entsprechender ASIC in einem Plastik-, Metall- oder Keramikgehäuse aufgebaut werden, beispielsweise in Form eines Hybridaufbaus, mittels Wirebonding, Flip-Chip-Technologie, etc. Denkbar ist auch eine monolithische Integration der MEMS-Technologie und der Asic-Technologie.

Schließlich betrifft die vorliegende Erfindung ein Verfahren zur Erfassung von Drehraten in drei zueinander orthogonalen Raumrichtungen, vorzugsweise unter Verwendung eines Sensors gemäß einer der hier beschriebenen Ausführungsformen oder Ansprüchen, wobei wenigstens vier Antriebsmassen vorzugsweise in Form einer ersten, einer zweiten, einer dritten und einer vierten Antriebsmasse jeweils zu einer translatorischen Schwingung als Primärbewegung angeregt werden, wobei wenigstens zwei Antriebsmassen die Primärbewegung senkrecht zur Primärbewegung wenigstens zweier anderer Antriebsmassen ausführen, wobei bei Wirkung einer zu erfassenden äußeren Drehrate eine durch Corioliskraft bewirkte Sekundärbewegung wenigstens einer Antriebsmasse auf die Detektionsmasse übertragen wird, und wobei die Detektionsmasse relativ zum Substrat Drehschwingungen in drei zueinander orthogonale Raumrichtungen (X,Y,Z) ausführen kann. Vorzugsweise schwingen dabei einander gegenüberliegend mit zwischenliegender Detektionsmasse angeordnete Antriebsmassen simultan in Antiphase. Des Weiteren liegen die Resonanzfrequenzen der Primär- und Sekundärbewegungen von Antriebsmasse sowie Detektionsmasse mit besonderem Vorteil in einem Bereich von 1,0 kHz bis 50,0 kHz, vorzugsweise in einem Bereich von 5 kHz bis 30,0 kHz, bevorzugter in einem Bereich von 10,0 kHz bis 12,0 kHz sowie besonders bevorzugt bei 11,0 kHz. Die Resonanzfrequenzen weiterer Bewegungsmoden können bei allen Ausführungsformen in einem höheren Frequenzbereich liegen, so dass störende Einkopplungen weitgehend vollständig vermieden werden können.

Weitere Vorteile und Merkmale der vorliegenden Erfindung ergeben sich aus der nachfolgenden, nicht beschränkenden Beschreibung beispielhafter Ausführungsformen anhand der Figuren. Dabei zeigt:

**Figur 1** eine schematische Darstellung des zur Beschreibung von Anordnungen und Orientierungen relativ zum Sensor verwendeten Bezugskoord inatensystems,

**Figur 2** eine schematische Darstellung einer Aufsicht auf einen Coriolis- Drehratensensor in Richtung der negativen Z-Achse auf die X-Y-Ebene,

**Figur 3**      eine der Figur 2 entsprechende Ansicht bei Einwirken eine äußeren Drehrate um die X-Achse,

**Figur 4**      eine der Figur 2 entsprechende Ansicht bei Einwirken einer äußeren Drehrate um die Y-Achse,

**Figur 5**      eine der Figur 2 entsprechende Ansicht bei Einwirken einer äußeren Drehrate um die Z-Achse,

**Figur 6**      die Antriebseinheit des Sensors nach den Fig. 2 bis 5 in einem vergrößerten Ausschnitt,

**Figur 7**      eine Antriebsmasse des Sensors in einer anderen Ausführungsform und in einer Aufsicht auf die X-Y-Ebene,

**Figur 8**      eine schematische Darstellung der Anordnung von Detektionseinheiten,

**Figur 9**      eine andere Ausführungsform des Sensors in einer Aufsicht auf die X-Y-Ebene in Richtung der negativen Z-Achse,

**Figur 10**      einen vergrößerten Ausschnitt aus dem Eckbereich des Sensors der Figur 9 und

**Figur 11**      eine schematische Darstellung einer Kombination eines 3D-Coriolis- Drehratensensors mit einem 3D-Beschleunigungssensor auf Chipebene als Inertial Measurement Unit (IMU).

In dem in der **Figur 1** dargestellten orthogonalen Koordinatensystem, das bei der vorstehenden allgemeinen Beschreibung der Erfindung sowie der nachfolgenden Beschreibung bevorzugter Ausführungsformen als Bezugssystem zur eindeutigen Bezeichnung von Anordnungen und Orientierungen relativ zum Sensor verwendet wird, sind neben den Bezeichnungen X, Y sowie Z für die drei Raumachsen die Geschwindigkeitsvektoren ($V_i$), die äußeren Drehraten ($\Omega_i$), den Drehwinkel ($\theta_i$) um die jeweilige Achse sowie die positive Drehrichtung eingezeichnet. Das Koordinatensystem ist in den meisten übrigen Figuren zum Zwecke einer besseren Übersichtlichkeit neben den jeweiligen Darstellungen des Sensors eingezeichnet. Es ist jedoch relativ zu diesem derart angeordnet, dass sein Ursprung mit dem zentralen Ankerpunkt 1 der Sensoren zusammenfällt, die X-Y-Ebene sich parallel zum Substrat und die Z-Achse sich orthogonal dazu erstreckt.

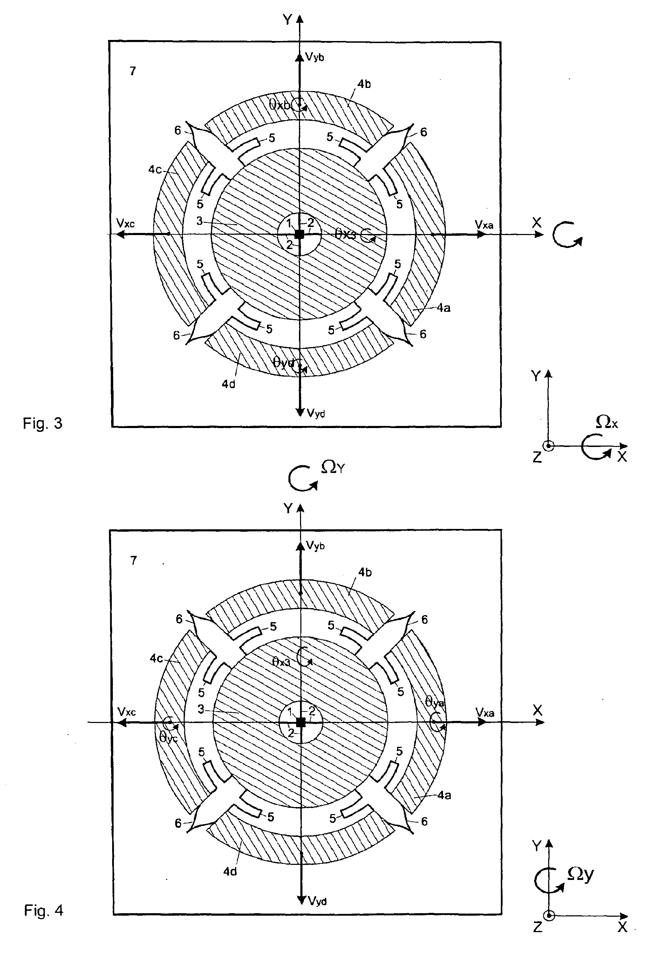

In der **Figur 2** ist ein Ausführungsbeispiel des Coriolis-Drehratensensors dargestellt. Die Figur zeigt eine Aufsicht auf die zum Substrat parallele X-Y-Ebene in negativer Z-Richtung. Der Sensor der Fig. 2 ist in den Figuren 3, 4 und 5 in gleicher Weise dargestellt, wobei ihn die letzteren Figuren bei Vorliegen einer äußere Drehrate um die X-Achse, die Y-Achse bzw. die Z-Achse zeigen. Gleiche Elemente des Sensors sind in den Figuren daher mit gleichen Bezugszeichen versehen.

Der Sensor des bevorzugten Ausführungsbeispiels weist einen zentralen Anker 1 auf, der eine Detektionsmasse 3 über radial angeordnete Federelemente 2 mit dem parallel zur Ebene der Detektionsmasse 3 angeordneten Substrat 7 verbindet. Die Federelemente 2 zwischen zentralem Anker 1 und Detektionsmasse 3 sind derart ausgebildet, dass Letztere im Wesentlichen drei Freiheitsgrade für Bewegungen besitzt. Sie ist in der Lage, Drehbewegungen um die X-Achse, die Y-Achse sowie die Z-Achse auszuführen. Translationsbewegungen der Detektionsmasse 3 werden durch die Federelemente 2 im Wesentlichen vollständig unterbunden.

Am Außenrand der Detektionsmasse 3 sind Federelemente 5 in radialer Richtung angeordnet. Über diese ist die Detektionsmasse 3 mit im dargestellten Ausführungsbeispiel vier Antriebsmassen 4a,4b,4c,4d gekoppelt. Die Antriebsmassen 4a,4b,4c,4d sind radial um die Detektionsmasse 3 herum angeordnet.

Die Antriebsmassen 4a,4b,4c,4d sind über Kopplungsfedern 6 miteinander gekoppelt, wobei zwischen zwei Antriebsmassen 4a,4b,4c,4d jeweils eine Kopplungsfeder 6 angeordnet ist. Die Kopplungsfedern 6 dienen der mechanischen Kopplung der Antriebsmassen 4a,4b,4c,4d untereinander, so dass bei einer geeigneten geometrischen Ausführung die Antriebsmassen 4a,4b,4c,4d als eine mechanische Einheit mit definierten Bewegungsmoden und Eigenfrequenzen angesehen werden können.

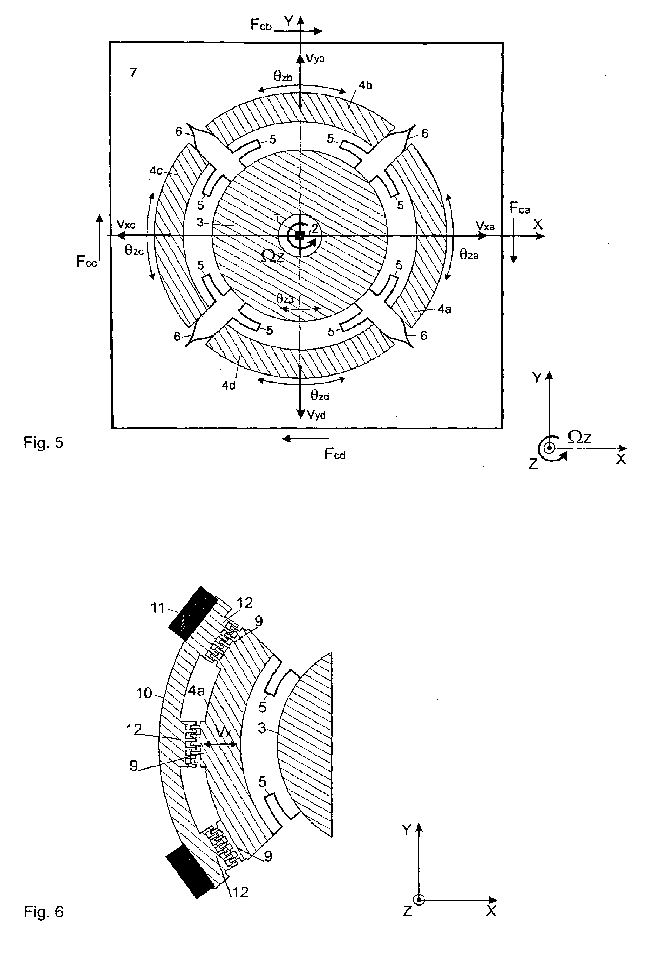

Die Antriebsmassen 4a,4b,4c,4d werden über in der Figur 6 vergrößert beispielhaft anhand der Antriebsmasse 4a dargestellte kapazitive Antriebe in Primärschwingung versetzt. Die Antriebe weisen je eine Gegenelektrode 10 auf, die über Außenanker 11 fest an dem Substrat 7 angeordnet ist. Die Gegenelektrode 10 weist radial nach innen in Richtung des zentralen Ankers 1 weisende Gegenelektrodenkämme 12 auf, deren Elektrodenfinger in radialer Richtung zum Ursprung des Bezugskoordinatensystems hin ausgerichtet sind. Die Gegenelektrodenkämme 12 greifen mit jeweils einem Elektrodenkamm 9 ineinander. Diese sind in radialer Richtung am Außenumfang der Antriebsmassen 4a,4b,4c, 4d angeordnet. Die Abstände zwischen den Elektroden und Gegenelektroden sind derart ausgewählt, dass die Antriebsmasse ihre Primärbewegung sowie sämtliche Sekundärbewegungen ausführen kann, ohne dass es zu einem Kontakt zwischen Elektrodenkamm 9 und Gegenelektrodenkamm 12 kommt.

Durch Anlegen einer Wechselspannung zwischen Elektrodenkamm 9 und Gegenelektrodenkamm 12 wird eine elektrostatische Kraft induziert, aufgrund der die Antriebsmasse relativ zur Gegenelektrode 10 in Form ihrer Primärbewegung ausgelenkt wird. Wird die elektrische Wechselspannung in der Nähe der mechanischen Resonanzfrequenz $f_R$ angelegt, kann bei niedrigem Dämpfungsfaktor (beispielsweise im Vakuum) auch bei relativ kleinen Spannungsamplituden eine große Auslenkung in einem Bereich von 0,1 bis 100$\mu$ erreicht werden. Sämtliche Konstruktionselemente, d.h. die Gegenelektrode 10, die Außenanker 11 sowie die Antriebsmassen 4a,4b,4c,4d sind dabei derart ausgelegt, dass sie weder durch die anliegenden elektrostatischen Kräfte noch durch Primär- oder Sekundärbewegungen verzerrt werden.

Die Antriebe der übrigen Antriebsmassen 4b, 4c und 4d sind in identischer Weise wie der zuvor beschriebene Antrieb der Antriebsmasse 4a ausgebildet.

Über einen derart ausgebildeten Antrieb wird jede Antriebsmasse 4a,4b,4c,4d individuell angetrieben. Dieses erfolgt derart, dass jede Antriebsmasse 4a,4b,4c,4d eine Primärschwingung in radialer Richtung ausführt. Die simultane Bewegungsrichtung der Antriebsmassen 4a,4b,4c,4d wird dabei derart aufeinander abgestimmt, dass sie sich entweder gleichzeitig radial nach außen, also vom zentralen Anker 1 weg, oder radial nach innen, also zum zentralen Anker 1 hin, bringen. Die Antriebsmasse 4a bewegt sich so radial in Richtung der positiven X-Achse ($V_{Xa}$), während die Antriebsmasse 4c sich radial in negativer X-Richtung ($V_{Xc}$) bewegt, die Antriebsmasse 4b sich radial in positiver Y-Richtung ($V_{Yb}$) bewegt und die Antriebsmasse 4d sich schließlich in negativer Y-Richtung ($V_{Yd}$) bewegt. Die Antriebsmassen 4a, 4b,4c,4d führen eine Radialschwingung in Antiphase aus. Das Design des Sensors ist derart ausgelegt, dass dieser Antiphasen-Antriebsmode die niedrigste Resonanzfrequenz aller möglichen Bewegungsmoden aufweist und die anderer Sekundärmoden höher liegen.

Bei Vorliegen einer äußeren Drehrate $\Omega$ wirken aufgrund der Primärschwingungen $V_{Xa},V_{Yb},V_{Xc},V_{Yd}$ der Antriebsmassen 4a,4b,4c,4d bedingt durch den Corioliseffekt auf diese Drehmomente ein. In der Figur 3 ist die Einwirkung einer äußeren Drehrate $\Omega_x$ um die X-Achse dargestellt. Die Antriebsmassen 4a,4b,4c,4d führen die zuvor beschriebenen Primärbewegungen $V_{Xa},V_{Yb},V_{Xc},V_{Yd}$ in Form radialer Schwingungen in Richtung der X- bzw. der Y-Achse aus. Die äußere Drehrate $\Omega_x$ führt zu einer Rotation des gesamten Systems um die X-Achse und bewirkt oszillierende Drehbewegungen $\theta_{Xb},\theta_{Xd}$ der Antriebsmassen 4b,4d um die X-Achse als deren Sekundärbewegung. Da die Antriebsmassen 4b,4d gegenphasige Primärbewegungen $V_{Yb},V_{Yd}$ ausüben, sind auch ihre Sekundärbewegungen $\theta_{Xb},\theta_{Xd}$ in Antiphase. Das bedeutet, dass während eines Zeitraums, in dem die Antriebsmasse 4b aus der dargestellten X-Y-Ebene in Richtung der positiven Z-Achse schwingt, die Antriebsmasse 4d aus der X-Y-Abene in Richtung der negativen Z-Achse schwingt.

Die äußere Drehrate $\Omega_x$ bewirkt bezüglich der Antriebsmassen 4a,4c keine Sekundärbewegungen, da deren Richtung mit der Richtung der Primärbewegungen $V_{Xa}$ und $V_{Xc}$ der Antriebsmassen 4a bzw. 4c übereinstimmt und es aufgrund der Relation der Corioliskraft als Kreuzprodukt $F_c=2m(v\times\Omega)$ nicht zum Auftreten von Corioliskräften kommt. Dieses führt dazu, dass die Antriebsmassen 4a,4c bei Wirken einer äußeren Drehrate $\Omega_x$ um die X-Achse lediglich ihre Primärbewegungen $V_{Xa}$ bzw. $V_{Xc}$ und keine Sekundärbewegungen ausführen.

Die Sekundärbewegungen $\theta_{Xb},\theta_{Xd}$ der Antriebsmassen 4b,4d werden mittels der Federelemente 5 auf die Detektionsmasse 3 übertragen. Da diese aufgrund der zentralen Aufhängung mittels derfederelemente 2 und des zentralen Ankers 1 Drehbewegungen um alle drei Raumachsen X,Y,Z ausführen kann, pendelt sie angeregt durch die Sekundärbewegungen $\theta_{Xb}$ und $\theta_{Xd}$ um die X-Achse. Diese Bewegung der Detektionsmasse 3 wird im folgenden als Erfassungsbewegung $\theta_{X3}$ bezeichnet. Die Größe der Auslenkung der Erfassungsbewegung $\theta_{X3}$ wird - wie im weiteren Verlauf beschrieben wird - kapazitiv erfasst und ist in erster Näherung direkt proportional zur äußeren Drehrate $\Omega_x$.

In analoger Weise wie zuvor beschrieben führt eine äußere Drehrate $\Omega_Y$ um die Y-Achse zu Sekundärbewegungen $\theta_{Ya}$ sowie $\theta_{Yc}$, der Antriebsmassen 4a bzw. 4c um die Y-Achse. Auf die Antriebsmassen 4b,4d wird keine Corioliskraft ausgeübt, da die äußere Drehrate $\Omega_Y$ richtungsgleich zu den Primärbewegungen $V_{Yb}$ und $V_{Yd}$ der Antriebsmassen 4b,4d ist. Die Sekundärbewegungen $\theta_{Ya}$ und $\theta_{Yc}$ der Antriebsmassen 4a, 4c werden über die Federelemente 5 auf die Detektionsmasse 3 übertragen, woraufhin diese zur Erfassungsbewegung $\theta_{Y3}$ in Form einer Drehschwingung um die Y-Achse angeregt wird. Wiederum ist die Größe der Auslenkung der Erfassungsbewegung $\theta_{Y3}$ der Detektionsmasse 3 direkt proportional zur äußeren Drehrate $\Omega_Y$ und kann kapazitiv erfasst werden.

In der Figur 5 ist die Einwirkung einer äußeren Drehrate $\Omega_Z$ um die Z-Achse dargestellt. Da die äußere Drehrate $\Omega_Z$ orthogonal zu sämtlichen Primärbewegungen $V_{Xa}$, $V_{Yb}$, $V_{Xc}$ sowie $V_{Yd}$ ist, wird auf jede Antriebsmasse 4a,4b,4c,4d eine Corioliskraft ausgeübt. Aufgrund der Kreuzrelation $F_c= (V\times\Omega)$ wird bei in jeweils positiver Achsrichtung verlaufenden Primärbewegungen $V_{Xa},V_{Yb},V_{Xc},V_{Yd}$ auf die Antriebsmasse 4a eine Corioliskraft in negativer Y-Richtung, auf die Antriebsmasse 4c eine Corioliskraft in positiver Y-Richtung, auf die Antriebsmasse 4b eine Corioliskraft in negativer X-Richtung und auf die Antriebsmasse 4d eine Corioliskraft in positiver X-Richtung ausgeübt. Bei Bewegungsumkehr der Primärbewegungen $V_{Xa},V_{Yb},V_{Xc},V_{Yd}$, d.h. bei einer Verringerung des Abstands der Antriebsmassen 4a,4b,4c,4d zum zentralen Anker 1, kommt es zu einer Vorzeichenumkehr der zuvor beschriebenen Corioliskräfte. Für den erstgenannten Fall sind die auf die Antriebsmassen 4a,4b,4c,4d wirkenden Corioliskräfte in die Figur 5 eingezeichnet. Es ist deutlich erkennbar, dass sich die Corioliskräfte bei einer Abstandsvergrößerung zum zentralen Anker 1 insgesamt zu einem auf die Antriebsmassen 4a,4b,4c,4d wirkenden Drehmoment im Uhrzeigersinn summieren, wohingegen es im umgekehrten Fall zu einem Drehmoment entgegen dem Uhrzeigersinn kommt. Die Antriebsmassen 4a,4b,4c,4d führen aufgrund der wirkenden Corioliskräfte Sekundärbewegungen in Form von Drehschwingungen $\theta_{Za}, \theta_{Zb}, \theta_{Zc}$ sowie $\theta_{Zd}$ um die Z-Achse aus. Diese Sekundärbewegungen werden durch die Wirkung der Federelemente 5 auf die Detektionsmasse 3 übertragen, woraufhin diese zum Durchführen einer Erfassungsbewegung in Form einer Drehschwingung $\theta_{Z3}$ um die Z-Achse angeregt wird. Die Erfassungsbewegung $\theta_{Z3}$ der Detektionsmasse 3 ist direkt proportional zur äußeren Drehrate $\Omega_Z$ und kann wiederum kapazitiv erfasst werden.

Insgesamt führen äußere Drehraten $\Omega_X$, $\Omega_Y$ sowie $\Omega_Z$ zu Erfassungsbewegungen $\theta_{X3}, \theta_{Y3}$ und $\theta_{Z3}$ der Detektionsmasse 3 in Form von Rotationsschwingungen um die jeweiligen Achsen X, Y und Z. Ein besonderer Vorteil der dargestellten Ausführungsform ist, dass sämtliche Erfassungsmoden von den Primärbewegungen mechanisch entkoppelt sind. So kommt es durch die gegenüberliegende Anordnung der Antriebsmassen 4a,4b,4c,4d sowie deren jeweils in Antiphase verlaufenden Primärbewegungen - die Antriebsmasse 4a führt ihre Primärbewegung $V_{Xa}$ in Antiphase zur Primärbewegung $V_{Xc}$ der Antriebsmasse 4c und die Antriebsmasse 4b ihre Primärbewegung $V_{Yb}$ in Antiphase zur Primärbewegung $V_{Yd}$ der Antriebsmasse 4d aus - zu einer gegenseitigen Auslöschung der durch die jeweils gegenüberliegenden Primärbewegungen verursachten Kräfte und Momente. Auch auf die Antriebsmassen 4a,4b,4c,4d wirkende Zentripetal- sowie Zentrifugalkräfte werden durch die gegenüberliegende Anordnung gegenseitig aufgehoben. Die Resonanzfrequenz $f_R$ des aus den Antriebsmassen 4a,4b,4c,4d, den Federelementen 5 sowie den Koppelfedern 6 gebildeten Systems liegt bei der dargestellten Ausführungsform vorzugsweise bei einem Wert von 11 kHz. Bei einem Gütefaktor von 10.000 schwingen die Antriebsmassen 4a,4b,4c,4d mit einer Amplitude von etwa $10\mu m$. Die Resonanzfrequenzen $f_{3X}, f_{3Y}, f_{3Z}$ der Detektionsmasse 3 bezüglich Rotationsschwingungen um die drei Achsen X, Y und Z liegen in einem ähnlichen Bereich, nämlich vorzugsweise zwischen ungefähr 10,0 und 12,0 kHz. Durch diese eng beieinander liegenden Resonanzfrequenzen des Systems Antriebsmassen 4a,4b,4c,4d, Federelemente 5 sowie Koppelfedern 6 einerseits ($f_R$) und der Detektionsmasse 3, ($f_{3X}, f_{3Y}, f_{3Z}$) andererseits wird eine gute Übertragbarkeit der Sekundärbewegungen der Antriebsmassen 4a,4b,4c,4d auf die Detektionsmasse 3 in Form deren Erfassungsbewegungen gewährleistet. Für eine maximale Übertragbarkeit wären nahezu identische Resonanzfrequenzen ideal, allerdings würden zeitabhängige Drehraten dann zu einem stark reduzierten und damit verfälschten Signal führen. Die Bandbreite wäre damit sehr gering.

Die die Antriebsmassen 4a,4b,4c,4d mit der Detektionsmasse 3 verbindenden Federelemente 5 sind derart ausgebildet, dass jeweils nur drei Bewegungsmoden der Antriebsmassen 4a,4b,4c,4d relativ zur Detektionsmasse 3 möglich sind. Im Falle der Antriebsmassen 4a und 4c sind dieses die Primärbewegungen $V_{Xa}$ und $V_{Xc}$ in radialer Richtung, die zueinander gegenphasig sind, sowie die Sekundärbewegungen in Form von Torsionsbewegungen $\theta_{Ya}$ bzw. $\theta_{Yc}$ um die Y-Achse sowie in Form von Torsionsbewegungen $\theta_{Za}$ und $\theta_{Zc}$ um die Z-Achse.

In analoger Weise können die Antriebsmassen 4b und 4d ebenfalls nur drei Bewegungsmoden relativ zur Detektionsmasse 3 ausführen. Es sind dies die Primärbewegungen $V_{Yb}$ und $V_{Yd}$ in radialer Richtung zum zentralen Anker und zueinander gegenphasig sowie die Sekundärbewegungen in Form von Torsionsbewegungen $\theta_{Xb}$ und $\theta_{Xd}$ um die X-Achse sowie in Form von Radialschwingungen $\theta_{Zb}$ und $\theta_{Zd}$ um die Z-Achse.

Alle anderen Bewegungsmoden der Antriebsmassen 4a,4b,4c,4d werden durch die Geometrie und Ausbildung der Federelemente 5 unterdrückt bzw. möglichst weitgehend eingeschränkt. Besonders wichtig ist hier die Unterdrückung zweier parasitärer Hauptmoden, nämlich einer Rotation der Antriebsmassen 4a sowie 4c um die X-Achse bzw. der Antriebsmassen 4b und 4d um die Y-Achse einerseits sowie eine phasengleiche Schwingung der Antriebsmassen 4a und 4c sowie 4b und 4d aus der X-Y-Ebene heraus in Richtung der Z-Achse (auch als Butterfly-Mode bezeichnet).

Bei der in den Figuren 2 bis 6 dargestellten Ausführungsform des Sensors wird der erstgenannte parasitäre Hauptmode dadurch minimiert, dass zur Kopplung der Antriebsmassen 4a und 4c an die Detektionsmasse 3 zwei möglichst weit von der X-Achse entfernt angeordnete Federelemente 5, und zur Kopplung der Antriebsmassen 4b und 4d an die Detektionsmasse 3 zwei möglichst weit von der Y-Achse entfernte Federelemente 5 verwendet werden.

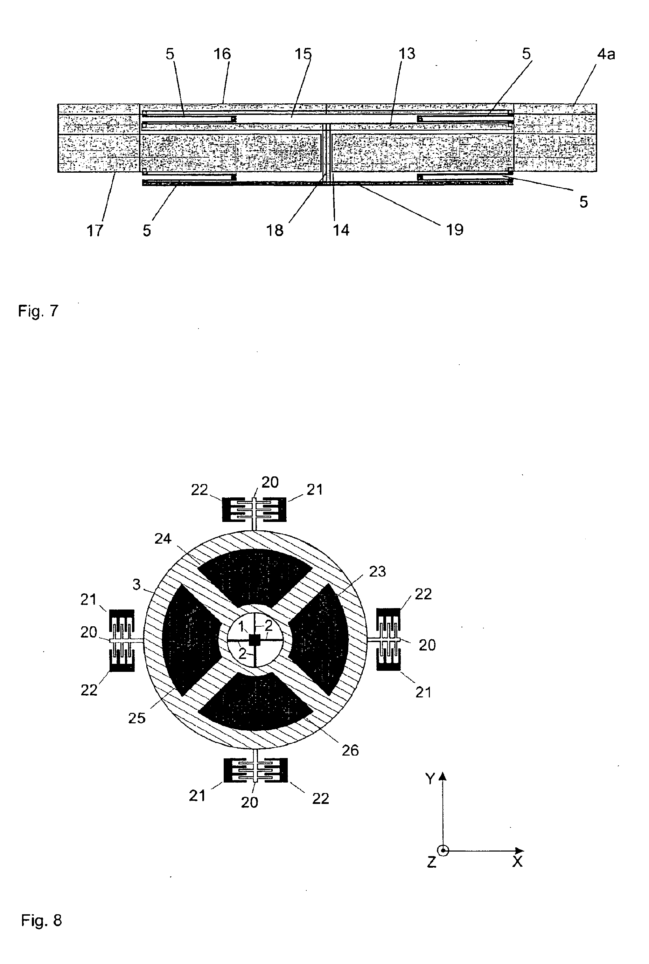

Dem zweitgenannten parasitären Hauptmode kann durch die im Detail in der Figur 7 dargestellte Ausbildung der Federelemente 5 sowie der Antriebsmassen 4a,4b,4c,4d entgegengewirkt werden. Die in der Figur 7 beispielhaft dargestellte Antriebsmasse 4a ist mittels insgesamt vier Federelementen 5 mit der Detektionsmasse 3 gekoppelt. Sie weist in ihrem Außenbereich 16 eine Ausnehmung 15 auf, die über einen radial verlaufenden Durchlass 14 zum zur Detektionsmasse 3 weisenden Innenbereich 17 hin geöffnet ist. In der Ausnehmung 15 sind jeweils möglichst weit von der durch den Durchlass 14 verlaufenden X-Achse entfernt zwei Federelemente 5 angeordnet. Diese beiden Federelemente 5 sind über eine Verbindungsstruktur miteinander verbunden, wobei diese wiederum über ein den Durchlass 14 durchgreifendes Balkenelement 18 mit einer weiteren Verbindungsstruktur 19 am Innenbereich 17 der Antriebsmasse 4a verbunden ist. Diese Verbindungsstruktur 19 ist wiederum endseitig mit den beiden anderen möglichst von der X-Achse entfernt angeordneten Federelementen 5 verbunden, die wiederum am Innenbereich 17 der Antriebsmasse 4 angeordnet sind.

Durch die in der Figur 7 dargestellte Vierpunktanordnung der Antriebsmasse 4a mittels der vier Federelemente 5 werden beide vorgenannte parasitäre Hauptmoden erfolgreich unterdrückt. Die möglichst weit von der X-Achse entfernte Anordnung der Federelemente 5 unterdrückt dabei die angesprochene Drehschwingung um die X-Achse, während die Anordnung der Federn am Außenbereich einerseits und am Innenbereich andererseits die phasengleiche Schwingung aus der X-Y-Ebene heraus (Butterfly-Mode) unterdrückt, der bei der dargestellten Antriebsmasse 4a in Form einer Torsionsschwingung um die Y-Achse vorliegt. Die übrigen Antriebsmassen 4b,4c,4d können in gleicher Weise gelagert sein.

In der Figur 8 ist eine mögliche Ausführungsform eines Detektionsmechanismus dargestellt. Zwischen der Detektionsmasse 3 und dem Substrat 7 sind insgesamt vier Elektrodenpaare 23 bis 26 angeordnet. Die Elektrodenpaare 23 sowie 25 sind im Bereich der X-Achse und die Elektrodenpaare 24 sowie 26 im Bereich der Y-Achse platziert. Die Elektrodenpaare 23 sowie 25 dienen einer Detektion einer Erfassungsbewegung der Detektionsmasse 3 um die Y-Achse, also einer Erfassung deren Drehschwingung $\theta_{Y3}$ um die Y-Achse. Die Elektrodenpaare 24 sowie 26 hingegen dienen der Erfassung der Erfassungsbewegung der Detektionsmasse 3 um die X-Achse, also der Erfassung der Rotationsschwingung $\theta_{X3}$ um die X-Achse. Durch Verwendung zusätzlicher Funktionsschichten oder eines entsprechend ausgebildeten Gegensubstrats, die in den beispielhaften Figuren nicht dargestellt sind, können zusätzlich oder alternativ Elektrodenpaare oberhalb der Detektionsmasse ausgebildet sein.

Um die Erfassungsbewegungen der Detektionsmasse 3 um die Z-Achse in Form der Drehschwingungen $\theta_{Z3}$ erfassen zu können, sind am Außenumfang der Detektionsmasse 3 vier Fingerelektroden 20 angeordnet. Die fingerförmigen Elektroden der Fingerelektroden 20 erstrecken sich tangential zum zentralen Anker 1. Die Fingerelektroden 20 stehen jeweils mit Gegenfingerelektroden 21, 22 in Eingriff, die ebenfalls tangential zum zentralen Anker 1 angeordnet sind. Obwohl in der dargestellten Ausführungsform die Verwendung von vier Fingerelektroden 20 mit einer entsprechenden Anzahl von Gegenfingerelektroden 21, 22 dargestellt ist, kann die aus einer Fingerelektrode 20 und zwei Gegenfingerelektroden 21, 22 bestehende Anordnung in beliebiger Anzahl an der Detektionsmasse 3 angeordnet sein.

Aufgrund der für MEMS typischen kleinen Strukturgrößen und geringen Auslenkungen liegen dort üblicherweise sehr geringe Kapazitätsänderungen vor. Die Messauflösung wird erheblich verbessert, wenn nicht die Kapazitätsänderung an einer Elektrode gemessen wird, sondern die differentielle Kapazität von zwei in geeigneter Weise angeordneten Elektrodenpaaren, so dass der absolute Kapazitätswert unerheblich ist. Einer derartigen Erfassung der differentiellen Kapazität dient die in der Figur 8 dargestellte Anordnung des Detektionsmechanismus. In der Ruhelage der Detektionsmasse 3, d.h. wenn keine äußere Drehrate $\Omega_X$, $\Omega_Y$, $\Omega_Z$ auf den Sensor einwirkt, wird der Differenzkapazität ein Wert von Null zugeordnet. Im Falle einer Auslenkung, d.h. bei Vorliegen einer Erfassungsbewegung der Detektionsmasse 3 relativ zum Substrat 7 aufgrund einer äußeren Drehrate $\Omega_X$, $\Omega_Y$, $\Omega_Z$ vergrößert bzw. verkleinert sich die differentielle Kapazität je nach Drehrichtung der Detektionsmasse 3.

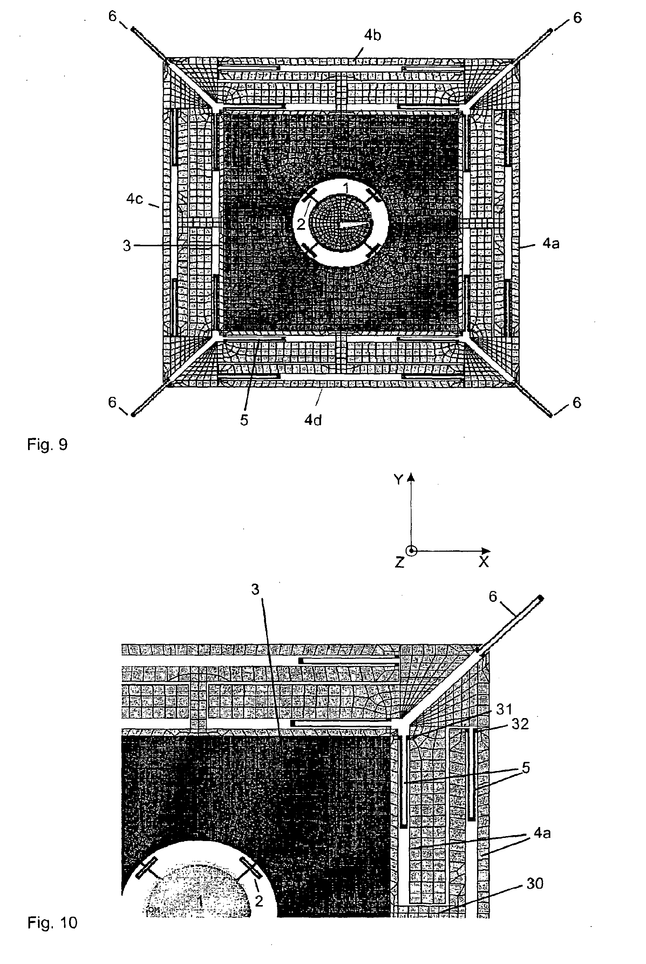

In den Figuren 9 und 10 ist eine weitere Ausführungsform des erfindungsgemäßen Drehratensensors dargestellt. Der Sensor entspricht im Wesentlichen der in den Figuren 2 bis 8 dargestellten Ausführungsform, weist jedoch abweichend hiervon eine in der X-Y-Ebene rechteckige Grundform auf.

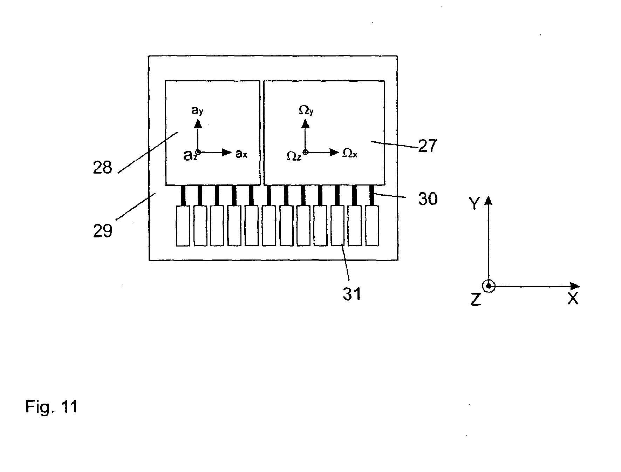

Die Figur 11 zeigt eine Kombination eines erfindungsgemäßen 3D-Coriolis-Drehratensensors 27 mit einem 3D-Beschleunigungssensor 28 auf einem MEMS-Silizium-Chip 29. Der 3D-Drehratensensor 27 und der 3D-Beschleunigungssensor 28 bilden zusammen eine vollständige IMU. Mittels des 3D-Drehratensensors 27 werden äußere Drehraten $\Omega_X$, $\Omega_Y$, $\Omega_Z$ um sämtliche Raumachsen des Koordinatenbezugssystems erfasst. Mittels des 3D-Beschleunigungssensors werden in der jeweiligen Achsrichtung vorliegende lineare Beschleunigungen $a_x$, $a_y$, $a_z$ erfasst. Beide Sensoren sind über entsprechende Zuleitungen 30 mit Anschlusspads 31 verbunden. Insgesamt kann der Chip in herkömmlicher Aufbau- und Verbindungstechnologie zusammen mit einer entsprechenden ASIC in einem in der Figur 11 nicht dargestellten Plastik-, Metall- oder Keramikgehäuse aufgebaut werden: Ebenfalls denkbar ist eine monolithische Integration der MEMS-Technologie sowie der ASIC-Technologie.

Bezugszeichenliste

| | |
|---|---|
| 1 | zentraler Anker |
| 2 | Federelement |
| 3 | Detektionsmasse |
| 4a,b,c,d | Antriebsmasse |
| 5 | Federelement |
| 6 | Kopplungsfeder |
| 7 | Substrat |
| 8 | |
| 9 | Elektrodenkamm |
| 10 | Gegenelektrode |
| 11 | Außenanker |
| 12 | Gegenelektrodenkamm |
| 13 | Verbindungsstruktur |

| 14 | Durchlass |
|----|-----------|
| 15 | Ausnehmung |
| 16 | Außenbereich |
| 17 | Innenbereich |
| 18 | Balkenelement |
| 19 | Verbindungsstruktur |
| 20 | Fingerelektrode |
| 21 | Gegenfingerelektrode |
| 22 | Gegenfingerelektrode |
| 23 | Elektrodenpaar |
| 24 | Elektrodenpaar |
| 25 | Elektrodenpaar |
| 26 | Elektrodenpaar |
| 27 | 3D-Coriolis-Drehratensensor |
| 28 | 3D-Beschleunigungssensor |
| 29 | Si-Chip |
| 30 | Zuleitungen |
| 31 | Anschlusspads |

## Patentansprüche

1. **Mikromechanischer Coriolis-Drehratensensor** zur Erfassung von Drehraten $Q_X, Q_X, Q_Z$ mit Komponenten um Messachsen in drei zueinander orthogonalen Raumrichtungen (X-, Y- und Z-Achse), aufweisend:

   ein Substrat (7),
   eine Detektionsmasse (3) und
   wenigstens zwei Antriebsmassen (4a,4b,4c,4d),
   wobei die Antriebsmassen (4a,4b,4c,4d) jeweils relativ zum Substrat zu einer Primärbewegung ($V_{Xa}, V_{Yb}, V_{Xc}, V_{Yd}$) antreibbar sind,
   wobei die Richtung der Primärbewegung ($V_{Xa}, V_{Yb}, V_{Xc}, V_{Yd}$) einer der wenigstens zwei Antriebsmassen (4a,4c) senkrecht zur Richtung der Primärbewegung ($V_{Xa}, V_{Yb}, V_{Xc}, V_{Yd}$) einer anderen der wenigstens zwei Antriebsmassen (4b,4d) ist,
   wobei die Detektionsmasse (3) mit den Antriebsmassen (4a,4b,4c,4d) gekoppelt ist,
   derart, dass die Detektionsmasse (3) durch eine Sekundärbewegung der Antriebsmassen (4a,4b,4c,4d), bewirkt durch Corioliskraft bei Wirkung einer zu erfassenden äußeren Drehrate, zu einer Erfassungsbewegung anregbar ist,
   **dadurch gekennzeichnet, dass**
   die Detektionsmasse (3) relativ zum Substrat als Erfassungsbewegung Drehschwingungen um Drehachsen in den drei zueinander orthogonale Raumrichtungen (X,Y,Z) ausführen kann.

2. Mikromechanischer Coriolis-Drehratensensor nach Anspruch 1, **dadurch gekennzeichnet, dass** die Detektionsmasse (3) an dem Substrat (7) oder an einer auf dem Substrat (7) aufgetragenen Schicht angeordnet ist.

3. Mikromechanischer Coriolis-Drehratensensor nach Anspruch 1 oder 2, **dadurch gekennzeichnet, dass** die Detektionsmasse (3) relativ zu dem Substrat (7) translatorisch unverschiebbar angeordnet ist.

4. Mikromechanischer Coriolis-Drehratensensor nach einem der vorhergehenden Ansprüche, **dadurch gekennzeichnet, dass** die Detektionsmasse (3) mittels einer in ihrem Massezentrum angeordneten inneren Aufhängung, vorzugsweise mittels eines zentralen Ankers (1) sowie zwischen diesem und der Detektionsmasse (3) angeordneten Federelementen (2), an dem Substrat (7) angeordnet ist.

5. Mikromechanischer Coriolis-Drehratensensor nach einem der vorhergehenden Ansprüche, **dadurch gekennzeichnet, dass** die Detektionsmasse (3) mit jeder Antriebsmasse derart gekoppelt ist, dass jede Antriebsmasse die Primärbewegung jeweils in radialer Richtung bezüglich der Detektionsmasse (3) ausführen kann.

6. Mikromechanischer Coriolis-Drehratensensor nach einem der vorhergehenden Ansprüche, **dadurch gekennzeichnet, dass** die Detektionsmasse mit jeder Antriebsmasse derart gekoppelt ist, dass jede Antriebsmasse relativ zur Detektionsmasse zwei rotatorische Sekundärbewegungen in zueinander orthogonalen Raumrichtungen ausführen kann.

7. Mikromechanischer Coriolis-Drehratensensor nach einem der vorhergehenden Ansprüche, **dadurch gekennzeichnet, dass** die Detektionsmasse mit jeder Antriebsmasse derart gekoppelt ist, dass keine Antriebsmasse relativ zur Detektionsmasse eine rotatorische Sekundärbewegung um eine zur Primärbewegung parallele Raumrichtung ausführen kann.

8. Mikromechanischer Coriolis-Drehratensensor nach einem der vorhergehenden Ansprüche, **dadurch gekennzeichnet, dass** die Antriebsmassen um die Detektionsmasse herum angeordnet sind, vorzugsweise dass die Detektionsmasse und die Antriebsmassen in einer Ebene angeordnet sind.

9. Mikromechanischer Coriolis-Drehratensensor nach einem der vorhergehenden Ansprüche, **dadurch gekennzeichnet, dass** jeweils zwei Antriebsmassen einander gegenüberliegend mit zwischenliegender Detektionsmasse angeordnet sind.

10. Mikromechanischer Coriolis-Drehratensensor nach einem der vorhergehenden Ansprüche, **dadurch gekennzeichnet, dass** jede Antriebsmasse jeweils mittels wenigstens eines Federelements mit der Detektionsmasse gekoppelt ist.

11. Mikromechanischer Coriolis-Drehratensensor nach einem der vorhergehenden Ansprüche, **dadurch gekennzeichnet, dass** wenigstens eine Antriebsmasse jeweils mittels eines oder mehrerer erster Federelemente, die an dem zur Detektionsmasse zugewandten Seitenbereich der Antriebsmasse angeordnet sind, und mittels eines oder mehrerer zweiter Federelemente, die an dem der Detektionsmasse abgewandten Seitenbereich der Antriebsmasse angeordnet sind, mit der Detektionsmasse gekoppelt ist.

12. Mikromechanischer Coriolis-Drehratensensor nach Anspruch 11, **dadurch gekennzeichnet, dass** wenigstens eine Antriebsmasse eine Ausnehmung in ihrem der Detektionsmasse abgewandten Seitenbereich aufweist, in der die zweiten Federelemente angeordnet sind.

13. Mikromechanischer Coriolis-Drehratensensor nach Anspruch 11 oder 12, **dadurch gekennzeichnet, dass** die ersten und zweiten Federelemente über eine im Wesentlichen biegesteife Struktur, vorzugsweise Balkenstruktur, miteinander verbunden sind, die in der Ausnehmung der Antriebsmasse angeordnet ist.

14. **Beschleunigungsmesseinheit** (IMU) mit einem Coriolis-Drehratensensor nach einem der vorhergehenden Ansprüche.

15. **Verfahren** zur Erfassung von Drehraten in drei zueinander orthogonale Raumrichtungen, vorzugsweise unter Verwendung eines Coriolis-Drehratensensors nach einem der Ansprüche 1 bis 13,
wobei wenigstens vier Antriebsmassen vorzugsweise in Form einer ersten (4a), einer zweiten (4b), einer dritten (4c) und einer vierten (4d) Antriebsmasse jeweils zu einer translatorischen Schwingung als Primärbewegung angeregt werden, wobei wenigstens zwei Antriebsmassen (4a,4b,4c,4d) die Primärbewegung senkrecht zur Primärbewegung wenigstens zweier anderer
Antriebsmassen (4a,4b,4c,4d) ausführen,
wobei bei Wirkung einer zu erfassenden äußeren Drehrate eine durch Corioliskraft bewirkte Sekundärbewegung wenigstens einer Antriebsmasse (4a,4b,4c,4d) auf die Detektionsmasse (3) übertragen wird, **dadurch gekennzeichnet, dass** die Detektionsmasse (2) relativ zum Substrat Drehschwingungen in drei zueinander orthogonale Raumrichtungen (X,Y,Z) ausführen kann.

## Claims

1. Micromechanical Coriolis rotation rate sensor for recording rotation rates $\Omega_X$, $\Omega_X$, $\Omega_Z$ with components about measuring axes in three spatial directions (X, Y and Z axis) which are orthogonal to one another, having:

a substrate (7),
a detection mass (3) and
at least two drive masses (4a, 4b, 4c, 4d),

wherein the drive masses (4a, 4b, 4c, 4d) can be driven to a primary movement ($V_{Xa}$, $V_{Yb}$, $V_{Xc}$, $V_{Yd}$) in each case relative to the substrate,

wherein the direction of the primary movement ($V_{Xa}$, $V_{Yb}$, $V_{Xc}$, $V_{Yd}$) of one of the at least two drive masses (4a, 4c) is vertical to the direction of the primary movement ($V_{Xa}$, $V_{Yb}$, $V_{Xc}$, $V_{Yd}$) of a further one of the at least two drive masses (4b, 4d),

wherein the detection mass (3) is coupled to the drive masses (4a, 4b, 4c, 4d),

such that the detection mass (3) can be stimulated to a recording movement by a secondary movement of the drive masses (4a, 4b, 4c, 4d), effected by Coriolis force on action of an outer rotation rate to be recorded, **characterised in that**

the detection mass (3) relative the substrate as a recording movement may execute rotational oscillations about rotary axes in the three spatial directions (X, Y, Z) which are orthogonal to one another.

2. Micromechanical Coriolis rotation rate sensor according to claim 1, **characterised in that** the detection mass (3) is arranged on the substrate (7) or on a layer applied to the substrate (7).

3. Micromechanical Coriolis rotation rate sensor according to claim 1 or 2, **characterised in that** the detection mass (3) is arranged to be non-displaceable in translational manner relative to the substrate (7).

4. Micromechanical Coriolis rotation rate sensor according to one of the preceding claims, **characterised in that** the detection mass (3) is arranged on the substrate (7) by means of an inner suspension arranged in its mass centre, preferably by means of a central anchor (1) and spring elements (2) arranged between the latter and the detection mass (3).

5. Micromechanical Coriolis rotation rate sensor according to one of the preceding claims, **characterised in that** the detection mass (3) is coupled to each drive mass such that each drive mass may execute the primary movement in each case in radial direction with respect to the detection mass (3).

6. Micromechanical Coriolis rotation rate sensor according to one of the preceding claims, **characterised in that** the detection mass is coupled to each drive mass such that each drive mass relative to the detection mass may execute two rotational secondary movements in spatial directions which are orthogonal to one another.

7. Micromechanical Coriolis rotation rate sensor according to one of the preceding claims, **characterised in that** the detection mass is coupled to each drive mass such that no drive mass relative to the detection mass may execute a rotational secondary movement about a spatial direction which is parallel to the primary movement.

8. Micromechanical Coriolis rotation rate sensor according to one of the preceding claims, **characterised in that** the drive masses are arranged around the detection mass, preferably in that the detection mass and the drive masses are arranged in one plane.

9. Micromechanical Coriolis rotation rate sensor according to one of the preceding claims, **characterised in that** in each case two drive masses are arranged opposite one another with intervening detection mass.

10. Micromechanical Coriolis rotation rate sensor according to one of the preceding claims, **characterised in that** each drive mass is coupled to the detection mass in each case by means of at least one spring element.

11. Micromechanical Coriolis rotation rate sensor according to one of the preceding claims, **characterised in that** at least one drive mass is coupled to the detection mass in each case by means of one or more first spring elements which are arranged on the side region of the drive mass facing the detection mass, and by means of one or more second spring elements which are arranged on the side region of the drive mass facing away from the detection mass.

12. Micromechanical Coriolis rotation rate sensor according to claim 11, **characterised in that** at least one drive mass has a recess in its side region facing away from the detection mass, in which the second spring elements are arranged.

13. Micromechanical Coriolis rotation rate sensor according to claim 11 or 12, **characterised in that** the first and second spring elements are connected to one another via a structure which is essentially resistant to bending, preferably beam structure, which is arranged in the recess of the drive mass.

14. Acceleration measuring unit (IMU) having a Coriolis rotation rate sensor according to one of the preceding claims.

**15.** Method for recording rotation rates in three spatial directions which are orthogonal to one another, preferably using a Coriolis rotation rate sensor according to one of claims 1 to 13, wherein at least four drive masses, preferably in the form of a first (4a), a second (4b), a third (4c) and a fourth (4d) drive mass are stimulated in each case to a translational oscillation as a primary movement, wherein at least two drive masses (4a, 4b, 4c, 4d) execute the primary movement vertically to the primary movement of at least two further drive masses (4a, 4b, 4c, 4d), wherein on action of an outer rotation rate to be recorded, a secondary movement effected by Coriolis force of at least one drive mass (4a, 4b, 4c, 4d) is transferred to the detection mass (3), **characterised in that** the detection mass (2) relative to the substrate may execute rotational oscillations in three spatial directions (X, Y, Z) which are orthogonal to one another.

**Revendications**

**1.** Capteur micromécanique de vitesse de rotation de Coriolis pour la détermination de vitesses de rotation $\Omega_X$, $\Omega_Y$, $\Omega_Z$ avec des composantes autour d'axes de rotation dans trois directions spatiales orthogonales l'une à l'autre (axe X, Y et Z), présentant:

- un substrat (7),
- une masse de détection (3), et
- au moins deux masses d'entraînement (4a, 4b, 4c, 4d),

dans lequel les masses d'entraînement (4a, 4b, 4c, 4d) peuvent être entraînées respectivement en un mouvement primaire ($V_{Xa}$, $V_{Yb}$, $V_{Xc}$, $V_{Yd}$) par rapport au substrat,
dans lequel la direction du mouvement primaire ($V_{Xa}$, $V_{Yb}$, $V_{Xc}$, $V_{Yd}$) d'une des au moins deux masses d'entraînement (4a, 4c) est perpendiculaire à la direction du mouvement primaire ($V_{Xa}$, $V_{Yb}$, $V_{Xc}$, $V_{Yd}$) d'une autre des au moins deux masses d'entraînement (4b, 4d),
dans lequel la masse de détection (3) est couplée aux masses d'entraînement (4a, 4b, 4c, 4d),
de telle manière que la masse de détection (3) puisse être excitée en un mouvement de détection par un mouvement secondaire des masses d'entraînement (4a, 4b, 4c, 4d), provoqué par la force de Coriolis sous l'effet d'une vitesse de rotation extérieure à déterminer,
**caractérisé en ce que** la masse de détection (3) peut effectuer des oscillations de rotation autour d'axes de rotation dans les trois directions spatiales (X, Y, Z) orthogonales l'une à l'autre par rapport au substrat comme mouvement de détection.

**2.** Capteur micromécanique de vitesse de rotation de Coriolis selon la revendication 1, **caractérisé en ce que** la masse de détection (3) est disposée sur le substrat (7) ou sur une couche déposée sur le substrat (7).

**3.** Capteur micromécanique de vitesse de rotation de Coriolis selon la revendication 1 ou 2, **caractérisé en ce que** la masse de détection (3) est disposée de façon immobile en translation par rapport au substrat (7).

**4.** Capteur micromécanique de vitesse de rotation de Coriolis selon l'une quelconque des revendications précédentes, **caractérisé en ce que** la masse de détection (3) est disposée sur le substrat (7) au moyen d'une suspension intérieure agencée à son centre de masse, de préférence au moyen d'un ancrage central (1) ainsi que d'éléments de ressort (2) disposés entre celui-ci et la masse de détection (3).

**5.** Capteur micromécanique de vitesse de rotation de Coriolis selon l'une quelconque des revendications précédentes, **caractérisé en ce que** la masse de détection (3) est couplée à chaque masse d'entraînement, de telle manière que chaque masse d'entraînement puisse exécuter, par rapport à la masse de détection (3), le mouvement primaire dans la direction radiale respective.

**6.** Capteur micromécanique de vitesse de rotation de Coriolis selon l'une quelconque des revendications précédentes, **caractérisé en ce que** la masse de détection est couplée à chaque masse d'entraînement, de telle manière que chaque masse d'entraînement puisse exécuter, par rapport à la masse de détection, deux mouvements secondaires de rotation dans des directions spatiales orthogonales l'une à l'autre.

**7.** Capteur micromécanique de vitesse de rotation de Coriolis selon l'une quelconque des revendications précédentes, **caractérisé en ce que** la masse de détection est couplée à chaque masse d'entraînement, de telle manière qu'aucune masse d'entraînement ne puisse exécuter, par rapport à la masse de détection, un mouvement secondaire de rotation autour d'une direction spatiale parallèle au mouvement primaire.

8. Capteur micromécanique de vitesse de rotation de Coriolis selon l'une quelconque des revendications précédentes, **caractérisé en ce que** les masses d'entraînement sont disposées autour de la masse de détection, de préférence en ce que la masse de détection et les masses d'entraînement sont disposées dans un plan.

9. Capteur micromécanique de vitesse de rotation de Coriolis selon l'une quelconque des revendications précédentes, **caractérisé en ce que** deux masses d'entraînement sont chaque fois disposées l'une en face de l'autre avec une masse de détection interposée.

10. Capteur micromécanique de vitesse de rotation de Coriolis selon l'une quelconque des revendications précédentes, **caractérisé en ce que** chaque masse d'entraînement est couplée à la masse de détection respectivement au moyen d'au moins un élément de ressort.

11. Capteur micromécanique de vitesse de rotation de Coriolis selon l'une quelconque des revendications précédentes, **caractérisé en ce qu'**au moins une masse d'entraînement est couplée à la masse de détection respectivement au moyen d'un ou de plusieurs premiers éléments de ressort, qui sont disposés sur la région latérale de la masse d'entraînement tournée vers la masse de détection, et au moyen d'un ou de plusieurs deuxièmes éléments de ressort, qui sont disposés sur la région latérale de la masse d'entraînement située à l'opposé de la masse de détection.

12. Capteur micromécanique de vitesse de rotation de Coriolis selon la revendication 11, **caractérisé en ce qu'**au moins une masse d'entraînement présente un évidement dans sa région latérale située à l'opposé de la masse de détection, dans lequel les deuxièmes éléments de ressort sont disposés.

13. Capteur micromécanique de vitesse de rotation de Coriolis selon la revendication 11 ou 12, **caractérisé en ce que** les premiers et les deuxièmes éléments de ressort sont reliés l'un à l'autre par une structure essentiellement rigide en flexion, de préférence une structure de poutre, qui est disposée dans l'évidement de la masse d'entraînement.

14. Unité de mesure de l'accélération (IMU) comportant un capteur de vitesse de rotation de Coriolis selon l'une quelconque des revendications précédentes.

15. Procédé pour la détection de vitesses de rotation dans trois directions spatiales orthogonales l'une à l'autre, de préférence en utilisant un capteur de vitesse de rotation de Coriolis selon l'une quelconque des revendications 1 à 13, dans lequel on excite au moins quatre masses d'entraînement, de préférence sous la forme d'une première (4a), d'une deuxième (4b), d'une troisième (4c) et d'une quatrième (4d) masse d'entraînement, respectivement en une oscillation de translation comme mouvement primaire, dans lequel au moins deux masses d'entraînement (4a, 4b, 4c, 4d) exécutent le mouvement primaire perpendiculairement au mouvement primaire d'au moins deux autres masses d'entraînement (4a, 4b, 4c, 4d), dans lequel on transfère un mouvement secondaire d'au moins une masse d'entraînement (4a, 4b, 4c, 4d) provoqué par la force de Coriolis à la masse de détection (3) lors de l'action de la vitesse de rotation à déterminer, **caractérisé en ce que** la masse de détection (3) peut exécuter par rapport au substrat des oscillations de rotation dans trois directions spatiales (X, Y, Z) orthogonales l'une à l'autre.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

**In der Beschreibung aufgeführte Patentdokumente**

- DE 102007012163 A1
- EP 1775551 A1
- US 20070266785 A1
- DE 102006016260 A1
- WO 9221000 A

**In der Beschreibung aufgeführte Nicht-Patentliteratur**

- **von M-Traechter ; T. Link, J. Dehnert ; J. Auber ; P. Nommensen ; Y. Manoli.** Novel 3-Axis Gyroscope on a Single Chip using SOI-Technology. *Inertial Sensors & Systems, HSG-IMIT*
- **P. Merz ; W. Reinert ; K. Reimer ; B. Wagner.** PSM-X2: Polysilicon surface micromachining process platform for vacuum-packaged sensors, Konferenzband Mikrosystemtechnik-Kongress. VDE Verlag, 2005, 467-470